# EUROPEAN PATENT APPLICATION

(11) **EP 1 942 449 A1**
(43) Date of publication of application: **09.07.2008**
(21) Application number: 05799055.8
(22) Date of filing: 26.10.2005
(51) Int. Cl.: G06Q 10/00, G06Q 50/00, H04L 9/32, G06K 19/07, G06K 17/00

(54) **WORK MANAGING SYSTEM, WORK MANAGING METHOD, STORAGE SERVER, AND TERMINAL**

(71) Applicant: MITSUBISHI DENKI KABUSHIKI KAISHA, Chiyoda-ku, Tokyo 100-8310 (JP)
(72) Inventor: TOGASHI, Masataka Mitsubishi Denki K.K., Chiyoda-ku, Tokyo 100-8310 (JP); KOYAMA, Yukiharu Mitsubishi Denki K.K., Tokyo 100-8310 (JP)
(74) Representative: Sajda, Wolf E.
(86) International application number: PCT/JP2005/019694
(87) International publication number: WO 2007/049343

(57) **Abstract**

It aims to easily and unfailingly manage and check a set-up situation of a product after a manufacturer ships the product, for example. In the operation management system (100), the verification server (300) generates a verification code verifying a time and a position at which an operation, such as installation or repair of the product, was performed. The database server (400) stores object information relating to the product to be corresponding to the verification code generated by the verification server (300), in a storage part (402). When either information for identifying the product or the verification code is input, the database server (400) reads the object information and the verification code corresponding to input information, from the storage part (402), and outputs the object information having been read and information indicating the time and the position verified by the verification code having been read.

## Description

### Technical Field

The present invention relates to an operation management system, an operation management method, a storage server apparatus, and a terminal apparatus. In particular, the present invention relates to an equipment set-up situation check (equipment set-up location management) system using a service of verifying time and position.

### Background Art

Conventionally, after shipping products (merchandise) such as air-conditioning equipment and photovoltaic generators, manufacturers collect information on where and how the products are installed (set up), and utilize the collected information for marketing, maintenance (for example, repairing, calling-back for recall, etc.), customer support, etc. This collecting information can be executed after the products have been delivered to customers through complicated distribution channels and after the installation, adjustment, setup, etc. has been carried out. Since most of the information to be collected, such as a set-up situation of a product, can not be set up in advance, it is input by a final distributor or a set-up personnel. Most of such information inputs are performed by filling them out on paper.

As a method of verifying time, it is known to the public to generate synthetic information from time information indicating time and temporal change information (for example, weather data) being verification information of the time information and changing in accordance with time progresses, and to use this synthetic information for verification (refer to Patent Document 1, for example). The same can be said for a method of verifying position. As a service practically using this method, COCO-DATES (registered trademark) service (website URL <http://www.mitsubishielectric.co.jp/coco-dates/>) can be cited, for example.
[Patent Document 1] Patent Publication No. 3475145

### Disclosure of the Invention

### Problems to be solved by the Invention

For collecting information on products installed, the above inefficient methods have been conventionally carried out, which causes large cost (man-hours). Moreover, since informational inputs are mostly performed on paper, there is a problem of many informational lack and errors. In particular, in the case a high-risk defect etc. is found relating to a product, it has been an issue for the manufacturer to have grasped the set-up situation of the product in order to recall and repair it. Moreover, in order to develop CRM (Customer Relation Management), such as quick after-sales care and information provision, it has been an issue to manage information, such as a set-up situation of the product.

The present invention aims to easily and unfailingly manage and check a set-up situation of a product after a manufacturer ships the product, for example.

### Means to solve the problems

An operation management system according to the present invention includes:
a verification server apparatus to generate verification information verifying a time and a position at which an operation was performed for an operational object being an object of an operation by an operation personnel; and
a storage server apparatus to store object information relating to the operational object to be corresponding to the verification information generated by the verification server apparatus, in a storage part; when either one of the object information, at least a part of it, and the verification information is input, to read the object information and the verification information corresponding to input information, from the storage part; and to output the object information having been read and information indicating the time and the position verified by the verification information having been read.

Moreover, an operation management system according to the present invention includes:
a first terminal apparatus including a first input part to input object information relating to an operational object being an object of an operation by an operation personnel, and a first transmission part to transmit the object information input by the first input part;
a verification server apparatus including a generation part to generate verification information verifying a time and a position at which the operation was performed for the operational object;
a storage server apparatus including a first reception part to receive the object information transmitted by the first transmission part included in the first terminal apparatus, and a storage part to store the object information received by the first reception part to be corresponding to the verification information generated by the generation part included in the verification server apparatus; and
a second terminal apparatus including a second input part to input either one of the object information, at least a part of it, and the verification information, and a second transmission part to transmit information input by the second input part,
wherein the storage server apparatus further includes a second reception part to receive the information transmitted by the second transmission part included in the second terminal apparatus, a read part to read the object information and the verification information corresponding to the information received by the second reception part, from the storage part, and an output part to output the object information read by the read part and information indicating the time and the position verified by the verification information read by the read part.

The first terminal apparatus further includes a third input part to input information indicating a time and a position at which the operation was performed for the operational object, and a third transmission part to transmit the information input by the third input part,
the verification server apparatus further includes a third reception part to receive the information transmitted by the third transmission part included in the first terminal apparatus, and
the generation part included in the verification server apparatus generates the verification information by synthesizing the information received by the third reception part and unique data obtained only at either one of the time and the position at which the operation was performed for the operational object.

The verification information verifies a time and a position at which a photograph of the operational object was taken, as the time and the position at which the operation was performed for the operational object,
the first input part included in the first terminal apparatus takes and inputs the photograph,
the first transmission part included in the first terminal apparatus transmits the photograph input by the first input part,
the first reception part included in the storage server apparatus receives the photograph transmitted by the first transmission part included in the first terminal apparatus,
the storage part included in the storage server apparatus stores the object information and the photograph received by the first reception part to be corresponding to the verification information generated by the generation part included in the verification server apparatus,
the read part included in the storage server apparatus reads the object information, the photograph, and the verification information corresponding to the information received by the second reception part, from the storage part, and
the output part included in the storage server apparatus outputs the object information and the photograph read by the read part and the information indicating the time and the position verified by the verification information read by the read part.

The generation part included in the verification server apparatus generates the verification information by synthesizing information indicating the time and the position at which the operation was performed for the operational object, unique data obtained only at either one of the time and the position, and the photograph.

The operational object displays a bar code by which the object information is encoded, and
the first input part included in the first terminal apparatus extracts and inputs the object information from the bar code displayed on the operational object.

The second input part included in the second terminal apparatus inputs location information relating to the location at which the operation was performed,
the second transmission part included in the second terminal apparatus transmits the location information,
the second reception part included in the storage server apparatus receives the location information transmitted by the second transmission part included in the second terminal apparatus,
the storage part included in the storage server apparatus stores the location information received by the second reception part to be corresponding to the verification information generated by the generation part included in the verification server apparatus,
the read part included in the storage server apparatus reads the object information, the location information and the verification information corresponding to the information received by the second reception part, from the storage part, and
the output part included in the storage server apparatus outputs the object information and the location information read by the read part, and the information indicating the time and the position verified by the verification information read by the read part.

The storage part included in the storage server apparatus stores map data, and
the output part included in the storage server apparatus outputs either one of the location indicated by the location information read by the read part and a position verified by the verification information read by the read part, onto the map data stored in the storage part.

The read part of the storage server apparatus creates history information on the operation for the operational object, based on the object information and the verification information corresponding to the information received by the second reception part, and
the output part of the storage server apparatus outputs the history information created by the read part.

The operation includes at least one of installing, checking, repairing, and calling-back of the operational object.

The operational object includes at least one of air-conditioning equipment, a photovoltaic generator, an elevator, a water heater, a hand drier, FA (Factory Automation) equipment, and NC (Numerical Control) equipment.

Moreover, an operation management method according to the present invention includes:
inputting object information relating to an operational object being an object of an operation by an operation personnel, by a first input part included in a first terminal apparatus;
transmitting the object information input by the first input part, by a first transmission part included in the first terminal apparatus;
generating verification information verifying a time and a position at which the operation was performed for the operational object, by a generation part included in a verification server apparatus;
receiving the object information transmitted by the first transmission part included in the first terminal apparatus, by a first reception part included in a storage server apparatus;
storing the object information received by the first reception part to be corresponding to the verification information generated by the generation part included in the verification server apparatus, by a storage part included in the storage server apparatus;
inputting either one of the object information, at least a part of it, and the verification information, by a second input part included in a second terminal apparatus;
transmitting information input by the second input part, by a second transmission part included in the second terminal apparatus;
receiving the information transmitted by the second transmission part included in the second terminal apparatus, by a second reception part included in the storage server apparatus;
reading the object information and the verification information corresponding to the information received by the second reception part, from the storage part, by a read part included in the storage server apparatus; and
outputting the object information read by the read part and information indicating the time and the position verified by the verification information read by the read part, by an output part included in the storage server apparatus.

The operation management method includes
inputting information indicating a time and a position at which the operation was performed for the operational object, by a third input part included in the first terminal apparatus,
transmitting the information input by the third input part, by a third transmission part included in the first terminal apparatus,
receiving the information transmitted by the third transmission part included in the first terminal apparatus, by a third reception part included in the verification server apparatus, and
generating the verification information by synthesizing the information received by the third reception part and unique data obtained only at either one of the time and the position at which the operation was performed for the operational object, by the generation part included in the verification server apparatus.

The verification information verifies a time and a position at which a photograph of the operational object was taken, as the time and the position at which the operation was performed for the operational object, and
the operation management method includes
taking and inputting the photograph, by the first input part included in the first terminal apparatus,
transmitting the photograph input by the first input part, by the first transmission part included in the first terminal apparatus,
receiving the photograph transmitted by the first transmission part included in the first terminal apparatus, by the first reception part included in the storage server apparatus,
storing the object information and the photograph received by the first reception part to be corresponding to the verification information generated by the generation part included in the verification server apparatus, by the storage part included in the storage server apparatus,
reading the object information, the photograph, and the verification information corresponding to the information received by the second reception part, from the storage part, by the read part included in the storage server apparatus, and
outputting the object information and the photograph read by the read part and the information indicating the time and the position verified by the verification information read by the read part, by the output part included in the storage server apparatus.

The operation management method includes
generating the verification information by synthesizing information indicating the time and the position at which the operation was performed for the operational object, unique data obtained only at either one of the time and the position, and the photograph, by the generation part included in the verification server apparatus.

The operational object displays a bar code by which the object information is encoded, and
the operation management method includes
extracting and inputting the object information from the bar code displayed on the operational object, by the first input part included in the first terminal apparatus.

The operation management method includes
inputting location information relating to the location at which the operation was performed, by the second input part included in the second terminal apparatus,
transmitting the location information, by the second transmission part included in the second terminal apparatus,
receiving the location information transmitted by the second transmission part included in the second terminal apparatus, by the second reception part included in the storage server apparatus,
storing the location information received by the second reception part to be corresponding to the verification information generated by the generation part included in the verification server apparatus, by the storage part included in the storage server apparatus,
reading the object information, the location information and the verification information corresponding to the information received by the second reception part, from the storage part, by the read part included in the storage server apparatus, and
outputting the object information and the location information read by the read part, and the information indicating the time and the position verified by the verification information read by the read part, by the output part included in the storage server apparatus.

The operation management method includes storing map data, by the storage part included in the storage server apparatus, and
outputting either one of the location indicated by the location information read by the read part and a position verified by the verification information read by the read part, onto the map data stored in the storage part, by the output part included in the storage server apparatus.

The operation management method includes creating history information on the operation for the operational object, based on the object information and the verification information corresponding to the information received by the second reception part, by the read part of the storage server apparatus, and
outputting the history information created by the read part, by the output part of the storage server apparatus.

Moreover, a storage server apparatus according to the present invention includes:
a storage part to store object information relating to an operational object to be corresponding to verification information, which verifies a time and a position at which an operation was performed for the operational object, generated by a verification server apparatus which generates the verification information;
a read part, when either one of the object information, at least a part of it, and the verification information is input, to read the object information and the verification information corresponding to input information, from the storage part; and
an output part to output the object information read by the read part and information indicating the time and the position verified by the verification information read by the read part.

Moreover, a terminal apparatus according to the present invention includes:
an input part to input object information relating to an operational object being an object of an operation by an operation personnel, and to input information indicating a time and a position at which the operation was performed for the operational object; and
a transmission part to transmit the information indicating the time and the position input by the input part to a verification server apparatus which generates verification information verifying the time and the position at which the operation was performed for the operational object based on the information, and to transmit the object information input by the input part to a storage server apparatus which stores the object information to be corresponding to the verification information generated by the verification server apparatus.

### Effects of the present Invention

According to the present invention, in the operation management system, the storage server apparatus stores object information relating to the operational object to be corresponding to the verification information generated by the verification server apparatus, in a storage part; when either one of the object information, at least a part of it, and the verification information is input, reads the object information and the verification information corresponding to input information, from the storage part; and outputs the object information having been read and information indicating the time and the position verified by the verification information having been read. Then, it becomes possible to easily and unfailingly manage and check a situation of an operation performed for an operational object.

Moreover, according to the present invention, in the operation management system, the first reception part included in the storage server apparatus receives the object information transmitted by the first transmission part included in the first terminal apparatus,
the storage part included in the storage server apparatus stores the object information received by the first reception part to be corresponding to the verification information generated by the generation part included in the verification server apparatus,
the second input part included in the second terminal apparatus inputs either one of the object information, at least a part of it, and the verification information,
the second transmission part transmits information input by the second input part,
the second reception part included in the storage server apparatus receives the information transmitted by the second transmission part included in the second terminal apparatus,
the read part reads the object information and the verification information corresponding to the information received by the second reception part, from the storage part, and
the output part outputs the object information read by the read part and information indicating the time and the position verified by the verification information read by the read part.
Then, it becomes possible to easily and unfailingly manage and check a situation of an operation performed for an operational object.

Moreover, the generation part included in the verification server apparatus generates the verification information by synthesizing the information received by the third reception part and unique data obtained only at either one of the time and the position at which the operation was performed for the operational object. Then, probative value of verification information can be improved.

Moreover, the first input part included in the first terminal apparatus takes and inputs the photograph,
the first transmission part transmits the photograph input by the first input part,
the first reception part included in the storage server apparatus receives the photograph transmitted by the first transmission part included in the first terminal apparatus,
the storage part stores the object information and the photograph received by the first reception part to be corresponding to the verification information generated by the generation part included in the verification server apparatus,
the read part reads the object information, the photograph, and the verification information corresponding to the information received by the second reception part, from the storage part, and
the output part outputs the object information and the photograph read by the read part and the information indicating the time and the position verified by the verification information read by the read part.
Then, it becomes possible to manage and check a detailed situation of an operation performed for an operational object.

The generation part included in the verification server apparatus generates the verification information by synthesizing information indicating the time and the position at which the operation was performed for the operational object, unique data obtained only at either one of the time and the position, and the photograph. Then, since the correspondence between the time and the position, and the photograph becomes firm, probative value of verification information can be further improved.

The first input part included in the first terminal apparatus extracts and inputs the object information from the bar code displayed on the operational object. Therefore, time and effort of inputting by hand can be saved.

The second input part included in the second terminal apparatus inputs location information relating to the location at which the operation was performed,
the second transmission part transmits the location information,
the second reception part included in the storage server apparatus receives the location information transmitted by the second transmission part included in the second terminal apparatus,
the storage part stores the location information received by the second reception part to be corresponding to the verification information generated by the generation part included in the verification server apparatus,
the read part reads the object information, the location information and the verification information corresponding to the information received by the second reception part, from the storage part, and
the output part outputs the object information and the location information read by the read part, and the information indicating the time and the position verified by the verification information read by the read part.
Then, it becomes possible to manage and check more exact or detailed information relating to a position where an operation is performed for an operational object.

The storage part included in the storage server apparatus stores map data, and the output part outputs either one of the location indicated by the location information read by the read part and a position verified by the verification information read by the read part, onto the map data stored in the storage part.
Then, it becomes possible to more easily check a location where an operation is performed for an operational object.

The read part of the storage server apparatus creates history information on the operation for the operational object, based on the object information and the verification information corresponding to the information received by the second reception part, and the output part outputs the history information created by the read part. Then, it becomes possible to check history of operations performed for an operational object.

Moreover, it becomes possible to easily and unfailingly manage and check a situation of installing, checking, repairing, and calling-back of the operational object, for example.

Moreover, it becomes possible to easily and unfailingly manage and check a situation of an operation for air-conditioning equipment, a photovoltaic generator, an elevator, a water heater, a hand drier, FA (Factory Automation) equipment, NC (Numerical Control) equipment, etc.

Moreover, according to the present invention, in the operation management method, the following is performed;
receiving the object information transmitted by the first transmission part included in the first terminal apparatus, by the first reception part included in the storage server apparatus,
storing the object information received by the first reception part to be corresponding to the verification information generated by the generation part included in the verification server apparatus, by the storage part,
inputting either one of the object information, at least a part of it, and the verification information, by the second input part included in the second terminal apparatus,
transmitting information input by the second input part, by the second transmission part,
receiving the information transmitted by the second transmission part included in the second terminal apparatus, by the second reception part included in the storage server apparatus,
reading the object information and the verification information corresponding to the information received by the second reception part, from the storage part, by the read part, and
outputting the object information read by the read part and information indicating the time and the position verified by the verification information read by the read part, by the output part.
Then, it becomes possible to easily and unfailingly manage and check a situation of an operation performed for an operational object.

Moreover, the following is performed; generating the verification information by synthesizing the information received by the third reception part and unique data obtained only at either one of the time and the position at which the operation was performed for the operational object, by the generation part included in the verification server apparatus.
Then, probative value of verification information can be improved.

Moreover, the following is performed;
taking and inputting a photograph by the first input part included in the first terminal apparatus,
transmitting the photograph input by the first input part, by the first transmission part,
receiving the photograph transmitted by the first transmission part included in the first terminal apparatus, by the first reception part included in the storage server apparatus,
storing the object information and the photograph received by the first reception part to be corresponding to the verification information generated by the generation part included in the verification server apparatus, by the storage part,
reading the object information, the photograph, and the verification information corresponding to the information received by the second reception part, from the storage part, by the read part, and
outputting the object information and the photograph read by the read part and the information indicating the time and the position verified by the verification information read by the read part, by the output part.
Then, it becomes possible to manage and check a detailed situation of an operation performed for an operational object.

Moreover, the following is performed; generating verification information by synthesizing information indicating the time and the position at which the operation was performed for the operational object, unique data obtained only at either one of the time and the position, and the photograph, by the generation part included in the verification server apparatus.
Then, since the correspondence between the time and the position, and the photograph becomes firm, probative value of verification information can be further improved.

Moreover, the following is performed; extracting and inputting object information from the bar code displayed on the operational object, by the first input part included in the first terminal apparatus. Therefore, time and effort of inputting by hand can be saved.

Moreover, the following is performed;
inputting location information relating to the location at which the operation was performed, by the second input part included in the second terminal apparatus,
transmitting the location information, by the second transmission part,
receiving the location information transmitted by the second transmission part included in the second terminal apparatus, by the second reception part included in the storage server apparatus,
storing the location information received by the second reception part to be corresponding to the verification information generated by the generation part included in the verification server apparatus, by the storage part,
reading the object information, the location information and the verification information corresponding to the information received by the second reception part, from the storage part, by the read part, and
outputting the object information and the location information read by the read part, and the information indicating the time and the position verified by the verification information read by the read part, by the output part.
Then, it becomes possible to manage and check more exact or detailed information relating to a position where an operation was performed for an operational object.

Moreover, the following is performed;
storing map data, by the storage part included in the storage server apparatus, and outputting either one of the location indicated by the location information read by the read part and a position verified by the verification information read by the read part, onto the map data stored in the storage part, by the output part.
Then, it becomes possible to easily check a position where an operation was performed for an operational object.

Moreover, the following is performed;
creating history information on the operation for the operational object, based on the object information and the verification information corresponding to the information received by the second reception part, by the read part of the storage server apparatus, and outputting the history information created by the read part, by the output part.
Then, it becomes possible to check history of operations performed for an operational object.

Moreover, according to the present invention, in the storage server apparatus,
the storage part stores object information relating to an operational object to be corresponding to verification information, which verifies a time and a position at which an operation was performed for the operational object, generated by a verification server apparatus which generates the verification information,
the read part, when either one of the object information, at least a part of it, and the verification information is input, reads the object information and the verification information corresponding to input information, from the storage part, and
the output part outputs the object information read by the read part and information indicating the time and the position verified by the verification information read by the read part.
Then, it becomes possible to easily and unfailingly manage and check a situation of an operation performed for an operational object.

Moreover, according to the present invention, in the terminal apparatus,
the input part inputs object information relating to an operational object being an object of an operation by an operation personnel, and inputs information indicating a time and a position at which the operation was performed for the operational object, and
the transmission part transmits the information indicating the time and the position input by the input part to a verification server apparatus which generates verification information verifying the time and the position at which the operation was performed for the operational object based on the information, and transmits the object information input by the input part to a storage server apparatus which stores the object information to be corresponding to the verification information generated by the verification server apparatus.
Then, it becomes possible to easily and unfailingly manage and check a situation of an operation performed for an operational object.

### Best Mode for Carrying Out the Invention

Embodiments of the present invention will be explained referring to figures.

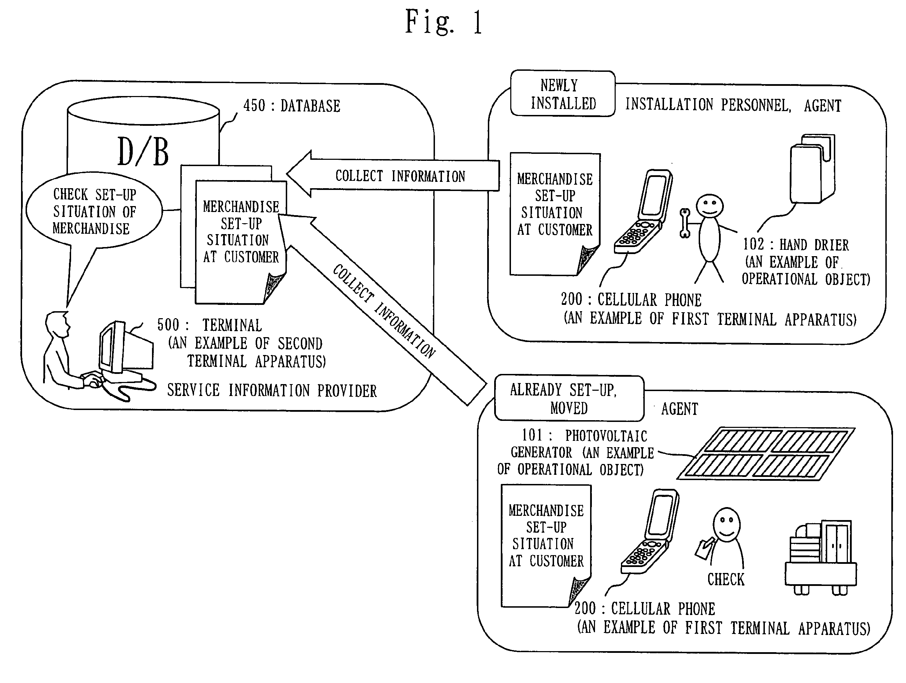

Fig. 1 illustrates a conceptual diagram showing an example of use of the operation management system in each Embodiment explained below.

For example, a manufacturer, after shipping a product (merchandise), such as a photovoltaic generator 101 (an example of an operational object) and a hand drier 102 (an example of an operational object) (Jet Towel (registered trademark), for example), collects information about a merchandise set-up situation at a customer, such as where and how the product is installed (an example of an operation) or where and how the product has been repaired (an example of an operation), by using an operation management system explained below.
In the case of newly installing a product, information which an installation personnel, an agent, etc. sends at the scene of the installation using a cellular phone 200 (an example of the first terminal apparatus) is collected. In the case of an existing product whose set-up situation has not been registered or in the case of transferring a product because of customer's moving, etc., information which an agent etc. sends at the scene of the installation using the cellular phone 200 is collected. The collected information is stored in a database 450.
By utilizing information stored in the database 450, a service information provider, such as a manufacturer's service center or a contractor whom a manufacturer entrusts a customer support business, can check the set-up situation of a product, provide a maintenance service and perform a customer support, using a terminal 500 (an example of the second terminal apparatus). Moreover, by analyzing data stored in the database 450, a manufacturer can acquire information on 'time, place and quantity of set-up of a product' and utilize it for marketing etc.

When the operation management system explained below collects information about a situation (merchandise set-up situation at customer) of an operation for a product, the operation to be performed for the product may be checking or calling-back of the product and other operation, in addition to installing and repairing of the product. Moreover, the product to be an object of the operation may be air-conditioning equipment, an elevator, a water heater, FA (Factory Automation) equipment, NC (Numerical Control) equipment, and other products in addition to the photovoltaic generator 101 and the hand drier 102.

### Embodiment 1

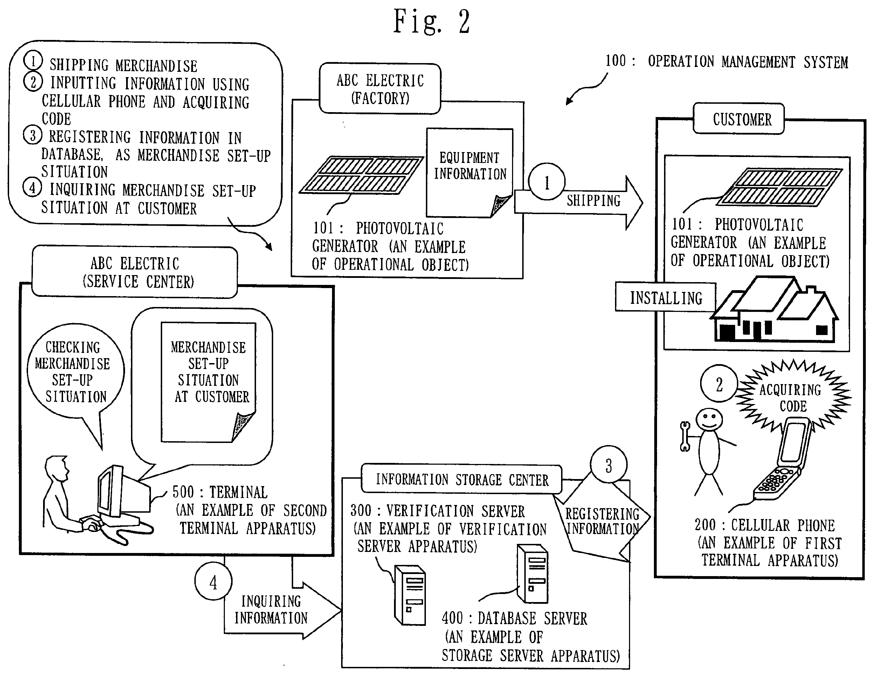

Fig. 2 illustrates a conceptual diagram showing an example of a configuration and use of the operation management system of Embodiment 1.

According to the present Embodiment, an operation management system 100 includes the cellular phone 200, a verification server 300 (an example of a verification server apparatus), a database server 400 (an example of a storage server apparatus), and the terminal 500. In the below stated, it is supposed that the database server 400 includes the above-mentioned database 450. However, it is also acceptable for the database server 400 and the database 450 to be implemented in separate chassis or separate hardware.

(1) ABC Electric, being a manufacturer and also a service information provider, manufactures the photovoltaic generator 101 at its factory, attaches equipment information relating to the photovoltaic generator 101 (the equipment information may be information printed on paper or data stored in a recording medium as an electronic file) and ships the photovoltaic generator 101 as merchandise.
(2) An installation personnel installs the photovoltaic generator 101 at the house of a customer who purchased it. Then, the installation personnel inputs equipment information attached to the photovoltaic generator 101, operation information relating to the installation operation, customer information, etc. to the cellular phone 200, and acquires a verification code which verifies the installation time and position from the information storage center, using the cellular phone 200 (the verification server 300 installed in the information storage center generates this verification code).
(3) The installation personnel transmits the information input at (2) to the information storage center as a set-up situation of the merchandise using the cellular phone 200, and registers it in the database 450 installed in the information storage center. The information registered is stored to be corresponding to the verification code acquired at (2) (the database server 400 installed in the information storage center acquires this verification code from the cellular phone 200 or the verification server 300 and stores it in the database 450).
(4) ABC Electric inquires of the database 450 installed in the information storage center for a merchandise set-up situation at the customer, by using the terminal 500 in the service center.

In the example of Fig. 2, the verification server 300 and the database server 400 are set up in the information storage center. However, it is also acceptable for the verification server 300 and the database server 400 to be set up in different places (buildings etc.). Alternatively, the verification server 300 and the database server 400 may be implemented in the same chassis or hardware.

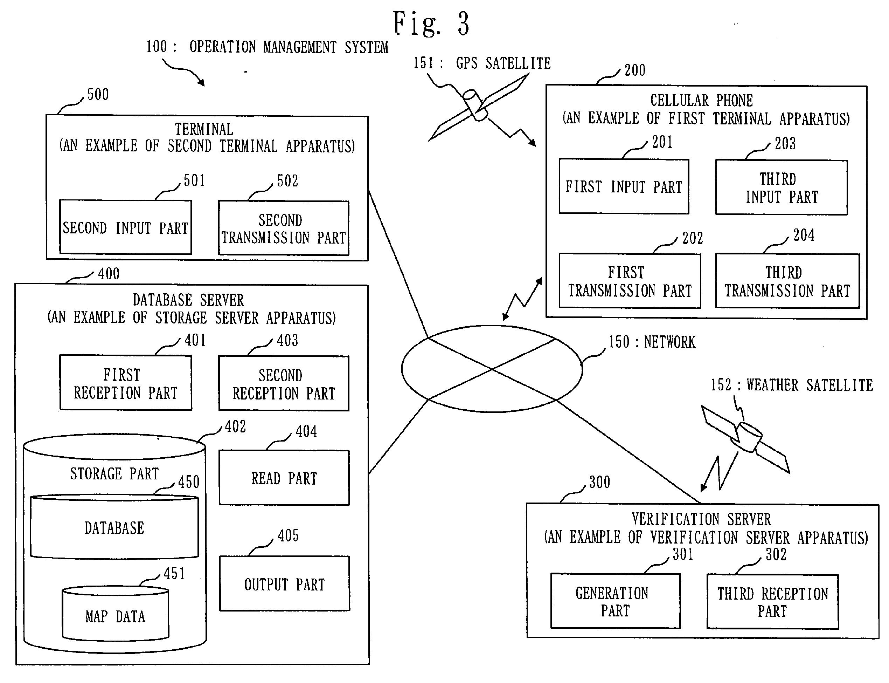

Fig. 3 illustrates a block diagram showing a configuration of the operation management system according to the present Embodiment.

The cellular phone 200, the verification server 300, the database server 400, and the terminal 500 included in the operation management system 100 mutually communicate through a network 150. The network 150 may include two or more independent networks. For example, in the case that the network 150 includes a mobile communications network, a WAN (Wide Area Network), and a LAN (Local Area Network), the cellular phone 200 and the verification server 300 are connected through the mobile communications network and the WAN, and the database server 400 and the terminal 500 are connected through the LAN, it is acceptable for the LAN to be independent of the mobile communications network and the WAN (in this case, for example, it is necessary to connect the database server 400 to the WAN, or connect the verification server 300 and the database server 400 to another LAN in order for the verification server 300 and the database server 400 to communicate with each other).

The cellular phone 200 includes a first input part 201, a first transmission part 202, a third input part 203, and a third transmission part 204, and the verification server 300 includes a generation part 301 and a third reception part 302.

The verification server 300 provides service of verifying time and position. As this service, the method described in the Patent Document 1 (in concrete terms, COCO-DATES (registered trademark) service) can be utilized, or a method that generates irreversible data of fixed length by using a hash function etc. for the information indicating time and position and uses the data of fixed length as the data for verification can also be utilized.
According to the present Embodiment, it is supposed that the verification server 300 verifies time and position by using the method described in the Patent Document 1, and the verification server 300 uses weather data (an example of a unique data obtained only at the time when operation was performed for the operational object) as the temporal change information.

The cellular phone 200 receives time information and position information from a GPS (Global Positioning System) satellite 151 etc. In order to make the verification server 300 generate a verification code (in the case of utilizing COCO-DATES (registered trademark) service, a COCO-DATES (registered trademark) code) based on time information and position information received, the cellular phone 200 transmits these pieces of information to the verification server 300.
The verification server 300 receives weather data from a weather satellite 152 (it is also acceptable to receive via another apparatus instead of directly receiving from the weather satellite 152), and generates a verification code by synthesizing the time information and the position information received from the cellular phone 200 and the weather data received from the weather satellite 152. In this case, it is also acceptable to synthesize natural phenomenon information (an example of a unique data obtained only at the position where an operation was performed for the operational object), such as temperature, humidity, atmospheric pressure, altitude, and wind velocity, in addition to the weather data.

According to the present Embodiment, (1) exact acquisition of position and time information, and (2) automatic acquisition of position and time information can be performed by effectively using the service of verifying time and position as stated above. Additionally, (3) acquisition of homogeneous information by an easy operation, (4) reduction of expense for introduction, and (5) reduction of equipment expense and system configuration expense, etc. can be performed.

The database server 400 includes a first reception part 401, a storage part 402, a second reception part 403, a read part 404, and an output part 405. The storage part 402 contains the database 450 and a map data 451. The terminal 500 includes a second input part 501 and a second transmission part 502. The terminal 500 is a PC (personal computer), for example.

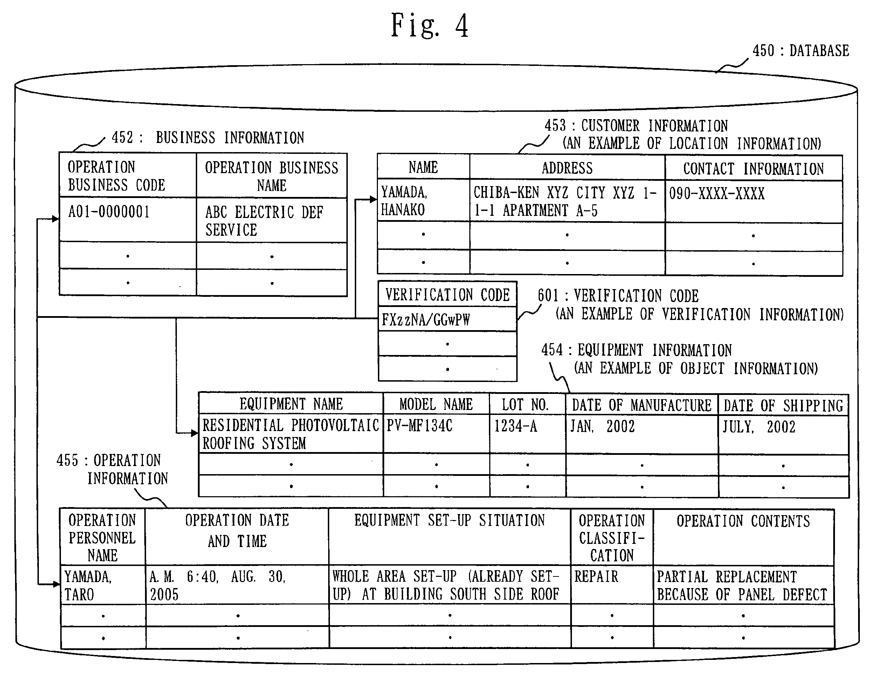

Fig. 4 illustrates an example of a configuration of the database 450.

According to the present Embodiment, the database 450 stores operation business information 452 beforehand in addition to a verification code 601 (an example of verification information), customer information 453 (an example of location information), equipment information 454 (an example of object information), and operation information 455 (a case of an operation classification being repair instead of installation is shown here as an example) described above.
Each of these pieces of information can be one table or can be divided into a plurality of tables in the database 450. Each of these pieces of information can be stored in the storage part 402 included in the database server 400 as one file or can be divided into a plurality of files and stored. Moreover, it is also acceptable to make the whole or a portion of these pieces of information be one table or to store it as one file.

The operation business information 452 contains, for example, an 'operation business code' and an 'operation business name' for identifying an operation business. The customer information 453 contains, for example, a customer's 'name', 'address', and 'contact information.' The equipment information 454 contains, for example, an 'equipment name', a 'model name', a 'lot number', a 'date of manufacture', and a 'date of shipping.' The operation information 455 contains, for example, an 'operation personnel name', an 'operation date and time', an 'equipment set-up situation', an 'operation classification' showing which one of installation, repair, etc. an operation is, and an 'operation contents'.
In the example of Fig. 4, the operation business information 452, the customer information 453, the equipment information 454, and the operation information 455 are all corresponding to the verification code 601. However, it is also acceptable to use other key to make correspondence or different key to make correspondence with each piece of information.

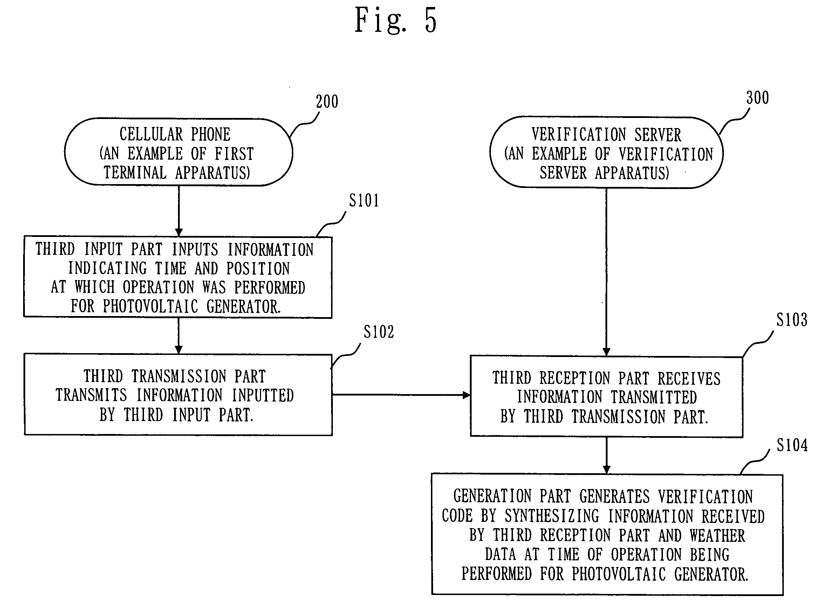

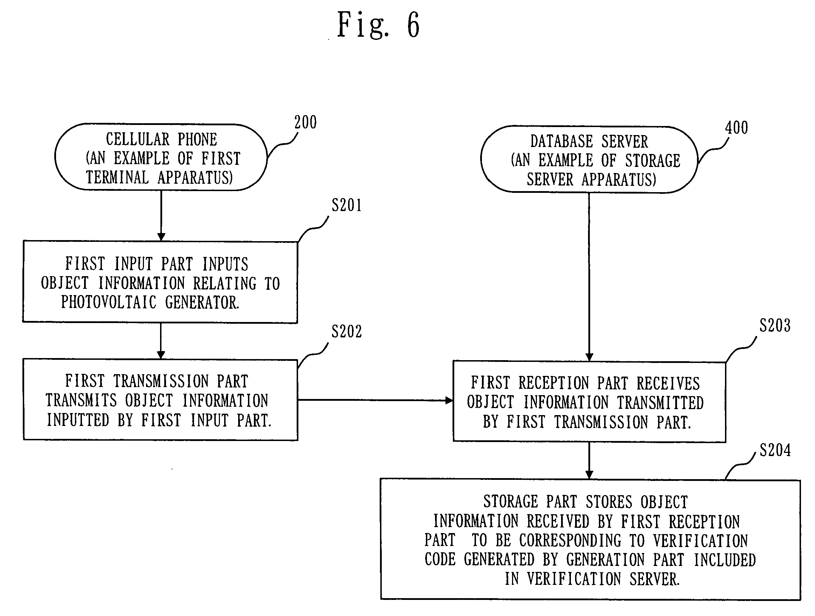

Figs. 5 and 6 are flowcharts showing operations of the operation management system (an example of an operation management method) according to the present Embodiment.

As shown in Fig. 5, the third input part 203 included in the cellular phone 200 inputs information (time information and position information received from the GPS satellite 151 etc.) indicating the time and the position at which an operation was performed for the photovoltaic generator 101 (Step S101). The third transmission part 204 transmits the information input by the third input part 203 (Step S102).

The third reception part 302 included in the verification server 300 receives the information transmitted by the third transmission part 204 included in the cellular phone 200 (Step S103). The generation part 301 generates a verification code by synthesizing the information received by the third reception part 302 and the weather data (weather data received from the weather satellite 152) at the time of the operation being performed for the photovoltaic generator 101 (Step S104).

As shown in Fig. 6, the first input part 201 included in the cellular phone 200 inputs object information (equipment information 454) relating to the photovoltaic generator 101 (Step S201). The first transmission part 202 transmits the object information input by the first input part 201 (Step S202).

The first reception part 401 included in the database server 400 receives the object information transmitted by the first transmission part 202 included in the cellular phone 200 (Step S203). The storage part 402 stores the object information received by the first reception part 401 to be corresponding to the verification code 601 generated by the generation part 301 included in the verification server 300 (Step S204). This verification code 601 may be input by the database server 400 (for example, an input part included in the database server 400, not illustrated), or this verification code 601 may be acquired by the storage part 402 from the cellular phone 200 (in this case, it is supposed that the cellular phone 200 also acquires the verification code 601 from the verification server 300 through the network 150, as a premise) or the verification server 300 through the network 150.

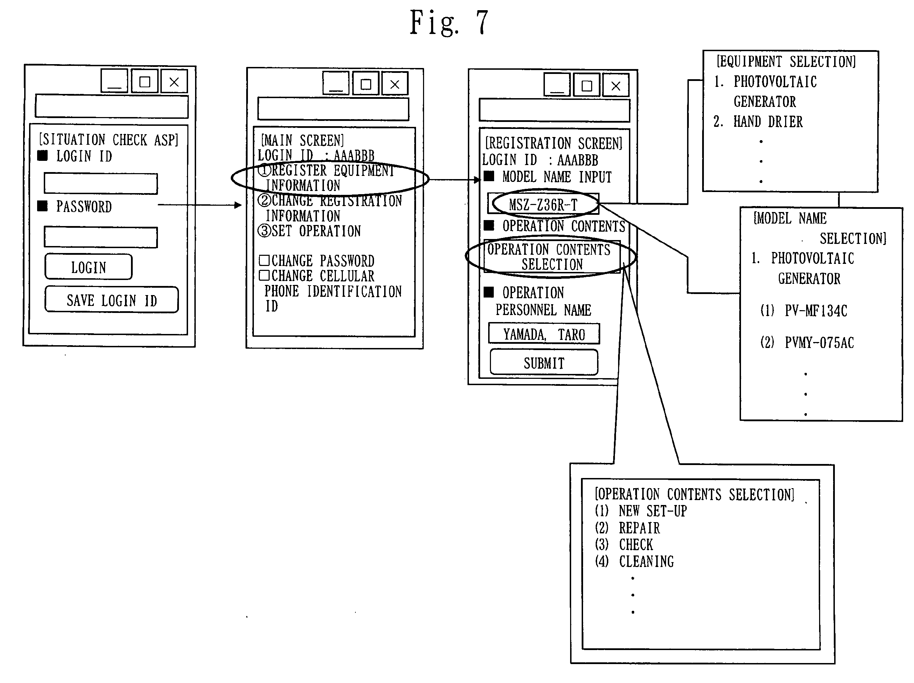

Fig. 7 shows an example of screen transition of the cellular phone 200.

Although not shown in Fig. 3, the cellular phone 200 includes an output part, such as an LCD (Liquid Crystal Display), and the output part displays a screen. A user of the cellular phone 200, such as an installation personnel, inputs information to the screen displayed by the output part through the input part, such as an operation button. For instance, in the example of Fig. 7, the user logs into the operation management system 100 by inputting a login ID and a password (the left side screen in Fig. 7).
Then, the user selects 'register equipment information' from the menu displayed on the main screen, and inputs (selects) the model name of the product, contents of the operation performed (or to be performed) for the product, the user's name, etc., on the registration screen (the right side screen in Fig. 7). The input information is transmitted to the database server 400 by the cellular phone 200 as object information.

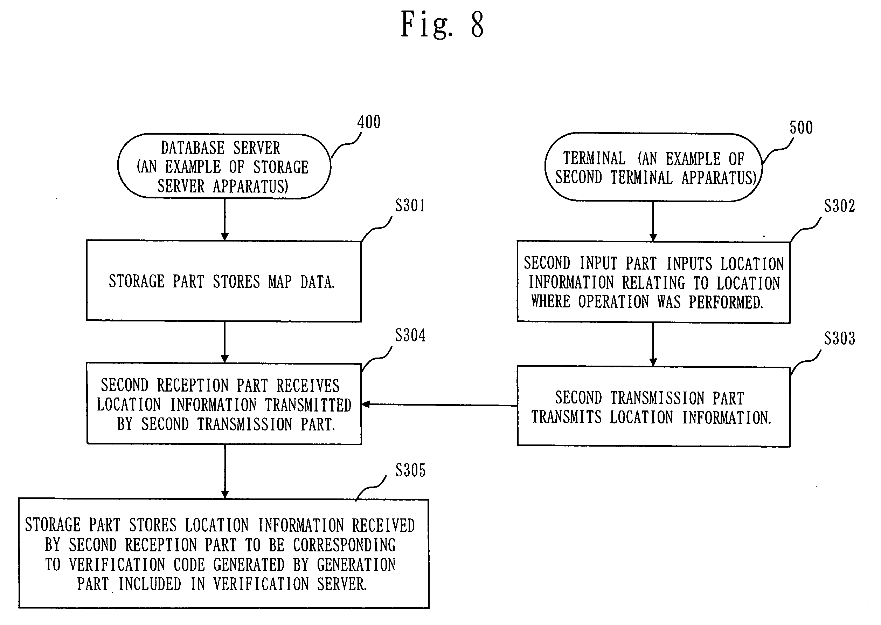

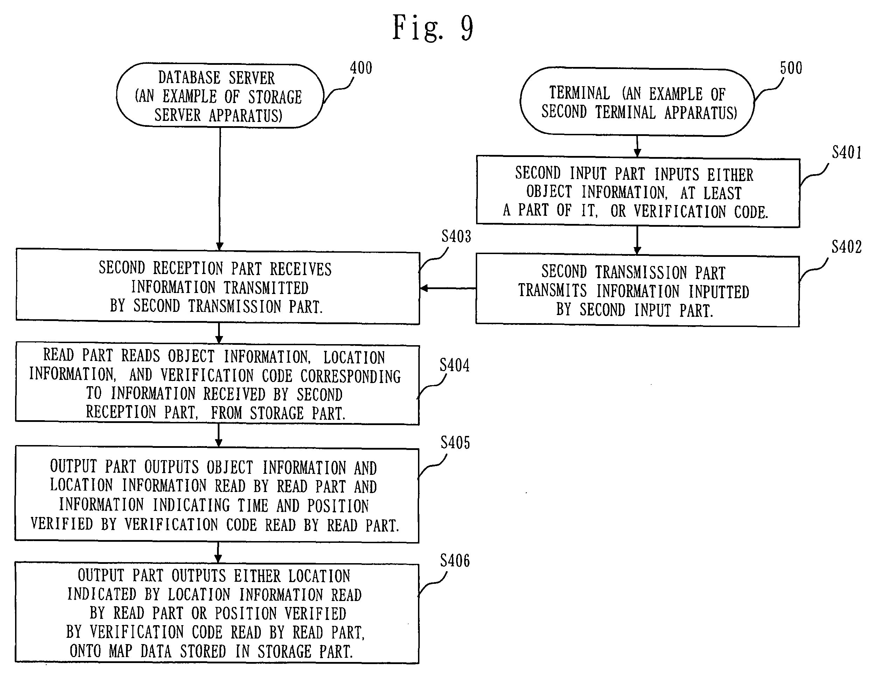

Figs. 8 and 9 are flowcharts showing operations of the operation management system (an example of an operation management method) according to the present Embodiment.

As shown in Fig. 8, the storage part 402 included in the database server 400 stores the map data 451 beforehand (Step S301).

The second input part 501 included in the terminal 500 (this terminal is not the one used by a service information provider but the one mainly used by an installation personnel or an agent) inputs location information (for example, data of an address contained in the customer information 453) relating to the location where the operation was performed (Step S302). The second transmission part 502 transmits the location information (Step S303).

The second reception part 403 included in the database server 400 receives the location information transmitted by the second transmission part 502 included in the terminal 500 (Step S304). The storage part 402 stores the location information received by the second reception part 403 to be corresponding to the verification code 601 generated by the generation part 301 included in the verification server 300 (Step S305).

As shown in Fig. 9, the second input part 501 included in the terminal 500 (this terminal is the one used by a service information provider) inputs either the object information, at least a part of it, (any information which can identify the photovoltaic generator 101, for example, a lot number contained in the equipment information 454) or the verification code 601 (Step S401). The second transmission part 502 transmits the information input by the second input part 501 (Step S402).

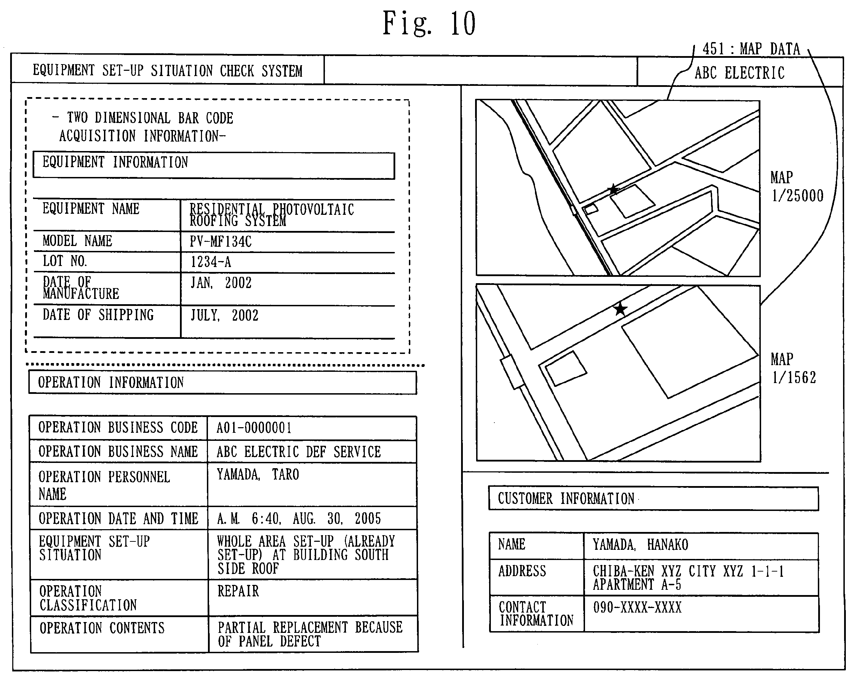

The second reception part 403 included in the database server 400 receives the information transmitted by the second transmission part 502 included in the terminal 500 (Step S403). The read part 404 reads the object information, the location information, and the verification code 601 corresponding to the information received by the second reception part 403, from the storage part 402 (Step S404). The output part 405 outputs the object information and the location information read by the read part 404 and information indicating the time and the position verified by the verification code 601 read by the read part 404 (Step S405).
Furthermore, the output part 405 outputs either the location (address) indicated by the location information read by the read part 404 or the position verified by the verification code 601 read by the read part 404, onto the map data 451 stored in the storage part 402 (Step S406). The output method of the output part 405 is to print on paper or to display on a screen, and the output result becomes the one such as shown in Fig. 10.

In the screen output example of the terminal 500 of Fig. 10, there are shown the equipment information 454 at upper left, the operation business information 452 and the operation information 455 at lower left, the map data 451 at upper right (in this example, the set-up location of the photovoltaic generator 101 is denoted by the stars on the maps of two scales) and the customer information 453 at lower right.

In the present Embodiment, it is also acceptable that the read part 404 included in the database server 400 creates history information on the operation for the photovoltaic generator 101, based on the object information and the verification code 601 corresponding to the information received by the second reception part at Step S403. The history information created by the read part 404 is stored in the database 450 of the storage part 402, and is output by the output part 405. In this case, the past data stored in the database 450 may simply be used as the history information.

As stated above, an operation management system according to the present Embodiment includes:
a verification server apparatus to generate verification information verifying a time and a position at which an operation was performed for an operational object being an object of an operation by an operation personnel; and
a storage server apparatus to store object information relating to the operational object to be corresponding to the verification information generated by the verification server apparatus, in a storage part; when either one of the object information, at least a part of it, and the verification information is input, to read the object information and the verification information corresponding to input information, from the storage part; and to output the object information having been read and information indicating the time and the position verified by the verification information having been read.

Moreover, an operation management system according to the present Embodiment includes:
a first terminal apparatus including a first input part to input object information relating to an operational object being an object of an operation by an operation personnel, and a first transmission part to transmit the object information input by the first input part;
a verification server apparatus including a generation part to generate verification information verifying a time and a position at which the operation was performed for the operational object;
a storage server apparatus including a first reception part to receive the object information transmitted by the first transmission part included in the first terminal apparatus, and a storage part to store the object information received by the first reception part to be corresponding to the verification information generated by the generation part included in the verification server apparatus; and
a second terminal apparatus including a second input part to input either one of the object information, at least a part of it, and the verification information, and a second transmission part to transmit information input by the second input part,
wherein the storage server apparatus further includes a second reception part to receive the information transmitted by the second transmission part included in the second terminal apparatus, a read part to read the object information and the verification information corresponding to the information received by the second reception part, from the storage part, and an output part to output the object information read by the read part and information indicating the time and the position verified by the verification information read by the read part.
The above feature makes it possible to easily and unfailingly manage and check a situation of an operation performed for an operational object.

The first terminal apparatus further includes a third input part to input information indicating a time and a position at which the operation was performed for the operational object, and a third transmission part to transmit the information input by the third input part,
the verification server apparatus further includes a third reception part to receive the information transmitted by the third transmission part included in the first terminal apparatus, and
the generation part included in the verification server apparatus generates the verification information by synthesizing the information received by the third reception part and unique data obtained only at either one of the time and the position at which the operation was performed for the operational object.
The above feature improves probative value of verification information.

The second input part included in the second terminal apparatus inputs location information relating to the location at which the operation was performed,
the second transmission part included in the second terminal apparatus transmits the location information,
the second reception part included in the storage server apparatus receives the location information transmitted by the second transmission part included in the second terminal apparatus,
the storage part included in the storage server apparatus stores the location information received by the second reception part to be corresponding to the verification information generated by the generation part included in the verification server apparatus,
the read part included in the storage server apparatus reads the object information, the location information and the verification information corresponding to the information received by the second reception part, from the storage part, and
the output part included in the storage server apparatus outputs the object information and the location information read by the read part, and the information indicating the time and the position verified by the verification information read by the read part.
The above feature makes it possible to manage and check more exact or detailed information relating to a position where an operation is performed for an operational object.

The storage part included in the storage server apparatus stores map data, and
the output part included in the storage server apparatus outputs either one of the location indicated by the location information read by the read part and a position verified by the verification information read by the read part, onto the map data stored in the storage part.
The above feature makes it possible to more easily check a location where an operation is performed for an operational object.

The read part of the storage server apparatus creates history information on the operation for the operational object, based on the object information and the verification information corresponding to the information received by the second reception part, and
the output part of the storage server apparatus outputs the history information created by the read part.
The above feature makes it possible to check history of operations performed for an operational object.

Moreover, an operation management method according to the present Embodiment includes:
inputting object information relating to an operational object being an object of an operation by an operation personnel, by a first input part included in a first terminal apparatus;
transmitting the object information input by the first input part, by a first transmission part included in the first terminal apparatus;
generating verification information verifying a time and a position at which the operation was performed for the operational object, by a generation part included in a verification server apparatus;
receiving the object information transmitted by the first transmission part included in the first terminal apparatus, by a first reception part included in a storage server apparatus;
storing the object information received by the first reception part to be corresponding to the verification information generated by the generation part included in the verification server apparatus, by a storage part included in the storage server apparatus;
inputting either one of the object information, at least a part of it, and the verification information, by a second input part included in a second terminal apparatus;
transmitting information input by the second input part, by a second transmission part included in the second terminal apparatus;
receiving the information transmitted by the second transmission part included in the second terminal apparatus, by a second reception part included in the storage server apparatus;
reading the object information and the verification information corresponding to the information received by the second reception part, from the storage part, by a read part included in the storage server apparatus; and
outputting the object information read by the read part and information indicating the time and the position verified by the verification information read by the read part, by an output part included in the storage server apparatus.
The above feature makes it possible to easily and unfailingly manage and check a situation of an operation performed for an operational object.

The operation management method includes
inputting information indicating a time and a position at which the operation was performed for the operational object, by a third input part included in the first terminal apparatus,
transmitting the information input by the third input part, by a third transmission part included in the first terminal apparatus,
receiving the information transmitted by the third transmission part included in the first terminal apparatus, by a third reception part included in the verification server apparatus, and
generating the verification information by synthesizing the information received by the third reception part and unique data obtained only at either one of the time and the position at which the operation was performed for the operational object, by the generation part included in the verification server apparatus.
The above feature improves probative value of verification information.

The operation management method includes
inputting location information relating to the location at which the operation was performed, by the second input part included in the second terminal apparatus,
transmitting the location information, by the second transmission part included in the second terminal apparatus,
receiving the location information transmitted by the second transmission part included in the second terminal apparatus, by the second reception part included in the storage server apparatus,
storing the location information received by the second reception part to be corresponding to the verification information generated by the generation part included in the verification server apparatus, by the storage part included in the storage server apparatus,
reading the object information, the location information and the verification information corresponding to the information received by the second reception part, from the storage part, by the read part included in the storage server apparatus, and
outputting the object information and the location information read by the read part, and the information indicating the time and the position verified by the verification information read by the read part, by the output part included in the storage server apparatus.
The above feature makes it possible to manage and check more exact or detailed information relating to a position where an operation is performed for an operational object.

The operation management method includes
storing map data, by the storage part included in the storage server apparatus, and
outputting either one of the location indicated by the location information read by the read part and a position verified by the verification information read by the read part, onto the map data stored in the storage part, by the output part included in the storage server apparatus.
The above feature makes it possible to more easily check a location where an operation is performed for an operational object.

The operation management method includes
creating history information on the operation for the operational object, based on the object information and the verification information corresponding to the information received by the second reception part, by the read part of the storage server apparatus, and
outputting the history information created by the read part, by the output part of the storage server apparatus.
The above feature makes it possible to check history of operations performed for an operational object.

Moreover, a storage server apparatus according to the present Embodiment includes:
a storage part to store object information relating to an operational object to be corresponding to verification information, which verifies a time and a position at which an operation was performed for the operational object, generated by a verification server apparatus which generates the verification information;
a read part, when either one of the object information, at least a part of it, and the verification information is input, to read the object information and the verification information corresponding to input information, from the storage part; and
an output part to output the object information read by the read part and information indicating the time and the position verified by the verification information read by the read part.

Moreover, a terminal apparatus according to the present Embodiment includes:
an input part to input object information relating to an operational object being an object of an operation by an operation personnel, and to input information indicating a time and a position at which the operation was performed for the operational object; and
a transmission part to transmit the information indicating the time and the position input by the input part to a verification server apparatus which generates verification information verifying the time and the position at which the operation was performed for the operational object based on the information, and to transmit the object information input by the input part to a storage server apparatus which stores the object information to be corresponding to the verification information generated by the verification server apparatus.
The above feature makes it possible to easily and unfailingly manage and check a situation of an operation performed for an operational object.

### Embodiment 2

The configuration of the operation management system according to the present Embodiment is the same as that of Embodiment 1 explained referring to Fig. 3.

In the present Embodiment, as shown in Fig. 5 referred to in the description of Embodiment 1, the third input part 203 included in the cellular phone 200 inputs information (time information and position information received from the GPS satellite 151 etc.) indicating the time and the position at which an operation was performed for the photovoltaic generator 101 (Step S101). The third transmission part 204 transmits the information input by the third input part 203 (Step S102).

The third reception part 302 included in the verification server 300 receives the information transmitted by the third transmission part 204 included in the cellular phone 200 (Step S103). The generation part 301 generates a verification code by synthesizing the information received by the third reception part 302 and the weather data (weather data received from the weather satellite 152) at the time of the operation being performed for the photovoltaic generator 101 (Step S 104).

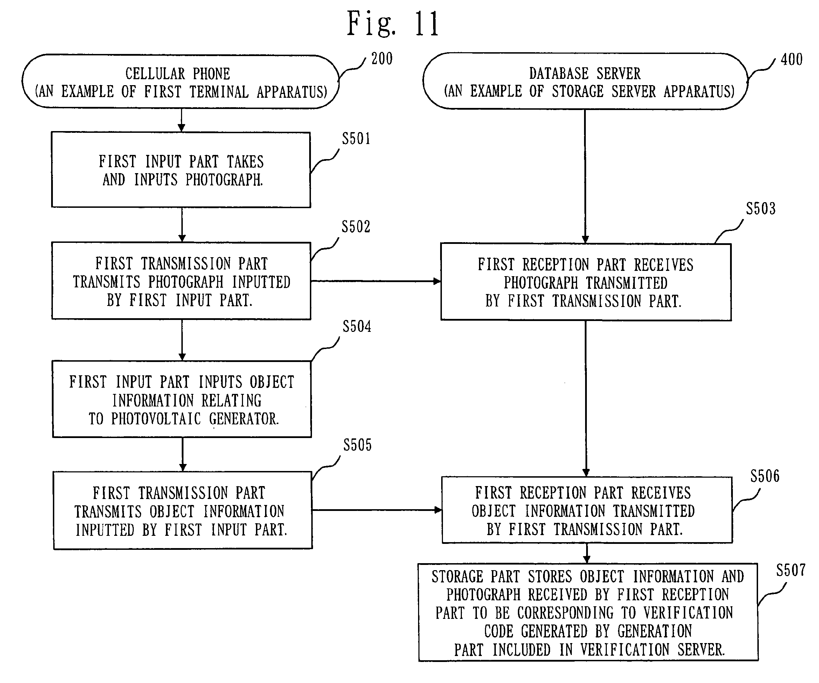

Fig. 11 is a flowchart showing operations of the operation management system (an example of an operation management method) according to the present Embodiment.

The first input part 201 included in the cellular phone 200 takes and inputs a photograph of the photovoltaic generator 101 for which installation or repair has been completed (Step S501). The first transmission part 202 transmits the photograph input by the first input part 201 (Step S502).

The first reception part 401 included in the database server 400 receives the photograph transmitted by the first transmission part 202 included in the cellular phone 200 (Step S503).

The first input part 201 included in the cellular phone 200 inputs object information (equipment information 454) relating to the photovoltaic generator 101 (Step S504). The first transmission part 202 transmits the object information input by the first input part 201 (Step S505).

The first reception part 401 included in the database server 400 receives the object information transmitted by the first transmission part 202 included in the cellular phone 200 (Step S506). The storage part 402 stores the object information and the photograph received by the first reception part 401, to be corresponding to the verification code 601 generated by the generation part 301 included in the verification server 300 (Step S507). This verification code 601 may be input by the database server 400 (for example, an input part included in the database server 400, not illustrated), or this verification code 601 may be acquired by the storage part 402 from the cellular phone 200 (in this case, it is supposed that the cellular phone 200 also acquires the verification code 601 from the verification server 300 through the network 150, as a premise) or the verification server 300 through the network 150.

At Step S104 mentioned above, it is also acceptable for the generation part 301 included in the verification server 300 to generate the verification code 601 by synthesizing the information received by the third reception part 302, the weather data at the time of the operation being performed for the photovoltaic generator 101, and the photograph. In this case, at Step S102 after Step S501, the third transmission part 204 included in the cellular phone 200 transmits the information input by the third input part 203 and the photograph. Then, at Step S 103, the third reception part 302 included in the verification server 300 receives the information and the photograph transmitted by the third transmission part 204 included in the cellular phone 200.

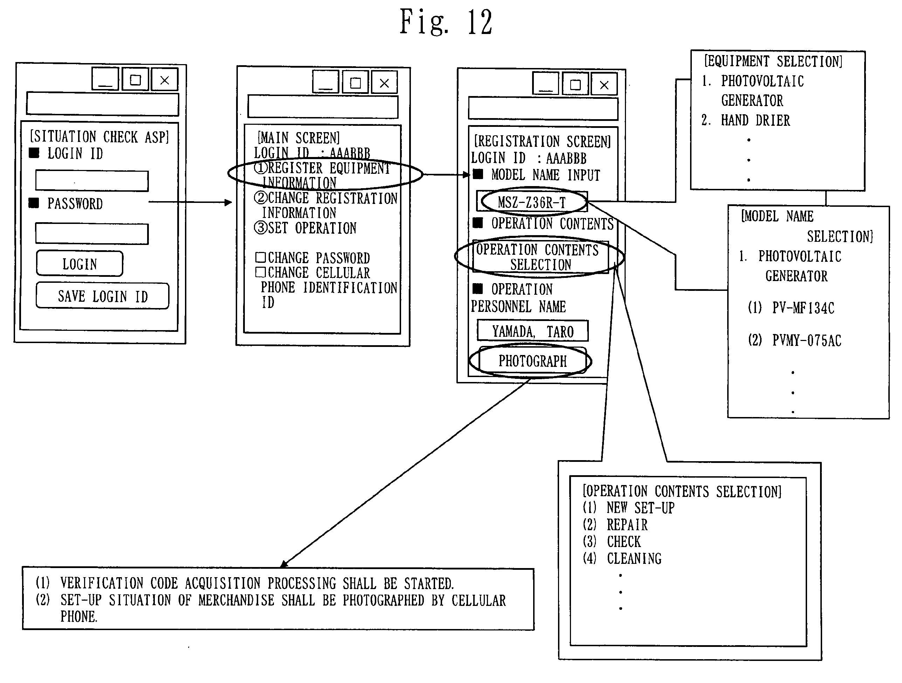

Fig. 12 shows an example of screen transition of the cellular phone 200.

In the example of Fig. 12, similar to Fig. 7 referred to in the description of Embodiment 1, the user logs into the operation management system 100 by inputting a login ID and a password (the left side screen in Fig. 12). Then, the user selects 'register equipment information' from the menu displayed on the main screen, and inputs (selects) the model name of the product, contents of the operation performed (or to be performed) for the product, the user's name, etc. on the registration screen (the right side screen in Fig. 12). Furthermore, by pressing down the button of 'photograph', the user makes the cellular phone 200 take a photograph of the product. The input information is transmitted to the database server 400 with the photograph by the cellular phone 200 as object information. It is also acceptable to configure to start the processing (verification code acquisition processing) in which the cellular phone 200 requests the verification server 300 to issue the verification code 601, by pressing down the button of 'photograph'.

In the present Embodiment, as shown in Fig. 8 referred to in the description of Embodiment 1, the storage part 402 included in the database server 400 stores the map data 451 beforehand (Step S301).

The second input part 501 included in the terminal 500 (this terminal is not the one used by a service information provider but the one mainly used by an installation personnel or an agent) inputs location information (for example, data of an address contained in the customer information 453) relating to the location where the operation was performed (Step S302). The second transmission part 502 transmits the location information (Step S303).

The second reception part 403 included in the database server 400 receives the location information transmitted by the second transmission part 502 included in the terminal 500 (Step S304). The storage part 402 stores the location information received by the second reception part 403 to be corresponding to the verification code 601 generated by the generation part 301 included in the verification server 300 (Step S305).

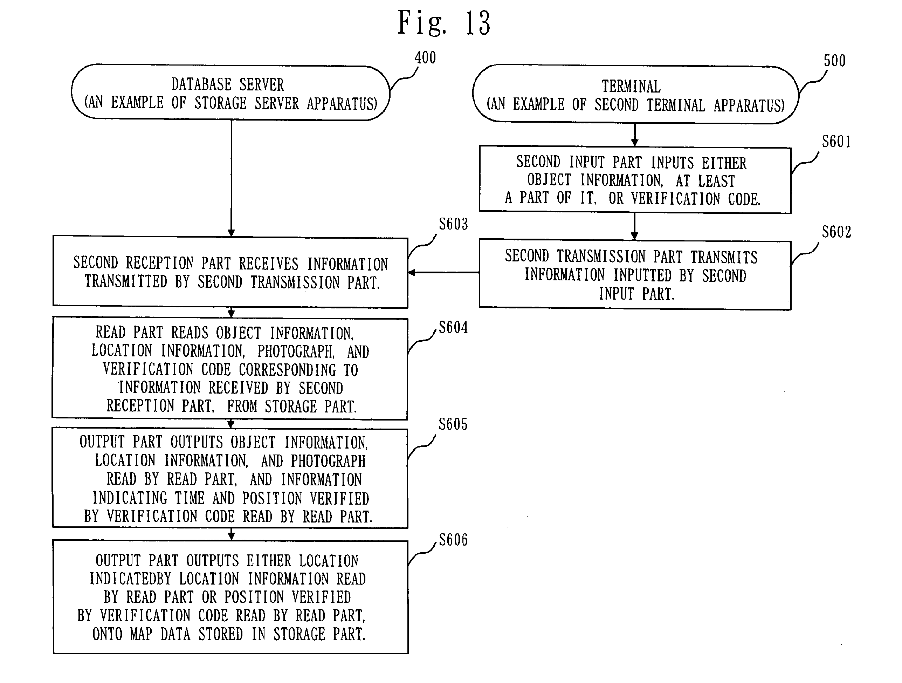

Fig. 13 is a flowchart showing operations of the operation management system (an example of an operation management method) according to the present Embodiment.

The second input part 501 included in the terminal 500 (this terminal is the one used by a service information provider) inputs either the object information, at least a part of it, (any information which can identify the photovoltaic generator 101, for example, a lot number contained in the equipment information 454) or the verification code 601 (Step S601). The second transmission part 502 transmits the information input by the second input part 501 (Step S602).

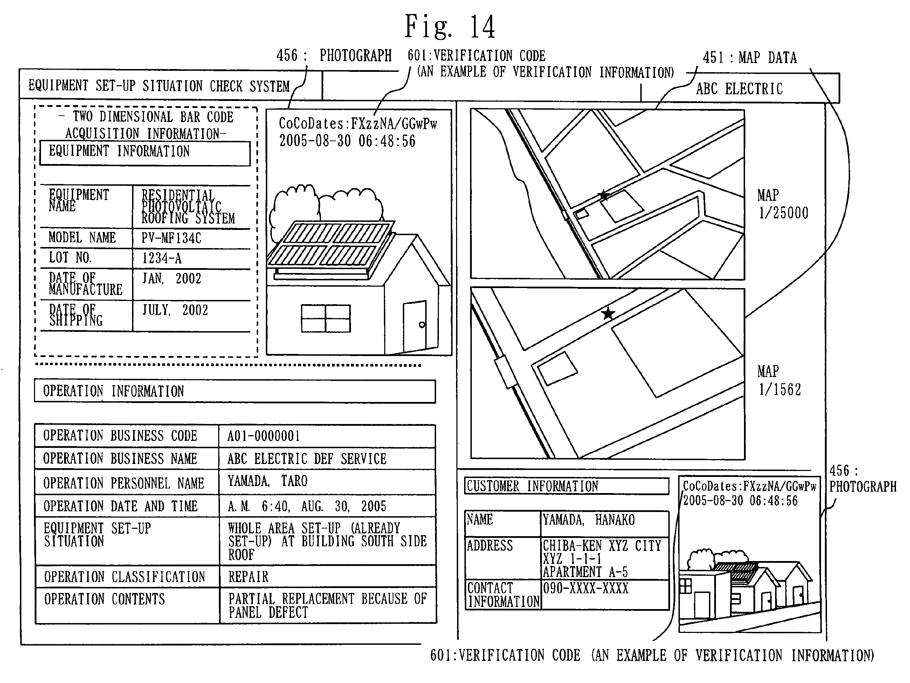

The second reception part 403 included in the database server 400 receives the information transmitted by the second transmission part 502 included in the terminal 500 (Step S603). The read part 404 reads the object information, the location information, the photograph, and the verification code 601 corresponding to the information received by the second reception part 403, from the storage part 402 (Step S604). The output part 405 outputs the object information, the location information, and the photograph read by the read part 404 and information indicating the time and the position verified by the verification code 601 read by the read part 404 (Step S605).
Furthermore, the output part 405 outputs either the location (address) indicated by the location information read by the read part 404 or the position verified by the verification code 601 read by the read part 404, onto the map data 451 stored in the storage part 402 (Step S606). The output method of the output part 405 is to print on paper or to display on a screen, and the output result becomes the one such as shown in Fig. 14.

In the screen output example of the terminal 500 of Fig. 14, there are shown the equipment information 454 and the photograph 456 at upper left, the operation business information 452 and the operation information 455 at lower left, the map data 451 at upper right (in this example, the set-up location of the photovoltaic generator 101 is denoted by the stars on the maps of two scales) and the customer information 453 at lower right. In the example of Fig. 14, the verification code 601 corresponding to the photograph and the time verified by the verification code 601 are printed on the photograph. The storage part 402 included in the database server 400 may store data of the photograph on which the verification code 601 and the time are printed such as the one in this example, as the photograph read by the read part 404.
Moreover, in Step S104 mentioned above, the generation part 301 included in the verification server 300 may generate the verification code 601 by synthesizing information received by the third reception part 302, weather data at the time when an operation was performed for the photovoltaic generator 101, and data of the photograph on which the verification code 601 and the time are printed as the present example.

In the present Embodiment, it is also acceptable that the read part 404 included in the database server 400 creates history information on the operation for the photovoltaic generator 101, based on the object information and the verification code 601 corresponding to the information received by the second reception part at Step S403. The history information created by the read part 404 is stored in the database 450 of the storage part 402, and is output by the output part 405. In this case, the past data stored in the database 450 may simply be used as the history information.

As stated above, the operation management system according to the present Embodiment includes the same features as the operation management system according to Embodiment 1, and
the verification information verifies a time and a position at which a photograph of the operational object was taken, as the time and the position at which the operation was performed for the operational object,
the first input part included in the first terminal apparatus takes and inputs the photograph,
the first transmission part included in the first terminal apparatus transmits the photograph input by the first input part,
the first reception part included in the storage server apparatus receives the photograph transmitted by the first transmission part included in the first terminal apparatus,
the storage part included in the storage server apparatus stores the object information and the photograph received by the first reception part to be corresponding to the verification information generated by the generation part included in the verification server apparatus,
the read part included in the storage server apparatus reads the object information, the photograph, and the verification information corresponding to the information received by the second reception part, from the storage part, and
the output part included in the storage server apparatus outputs the object information and the photograph read by the read part and the information indicating the time and the position verified by the verification information read by the read part.
The above feature makes it possible to manage and check a detailed situation of an operation performed for an operational object.

The generation part included in the verification server apparatus generates the verification information by synthesizing information indicating the time and the position at which the operation was performed for the operational object, unique data obtained only at either one of the time and the position, and the photograph.
The above feature improves probative value of verification information.

Moreover, the operation management method according to the present Embodiment includes the same feature as the operation management method according to Embodiment 1, and
the verification information verifies a time and a position at which a photograph of the operational object was taken, as the time and the position at which the operation was performed for the operational object, and
the operation management method includes
taking and inputting the photograph, by the first input part included in the first terminal apparatus,
transmitting the photograph input by the first input part, by the first transmission part included in the first terminal apparatus,
receiving the photograph transmitted by the first transmission part included in the first terminal apparatus, by the first reception part included in the storage server apparatus,
storing the object information and the photograph received by the first reception part to be corresponding to the verification information generated by the generation part included in the verification server apparatus, by the storage part included in the storage server apparatus,
reading the object information, the photograph, and the verification information corresponding to the information received by the second reception part, from the storage part, by the read part included in the storage server apparatus, and
outputting the object information and the photograph read by the read part and the information indicating the time and the position verified by the verification information read by the read part, by the output part included in the storage server apparatus.
The above feature makes it possible to manage and check a detailed situation of an operation performed for an operational object.

The operation management method includes
generating the verification information by synthesizing information indicating the time and the position at which the operation was performed for the operational object, unique data obtained only at either one of the time and the position, and the photograph, by the generation part included in the verification server apparatus.
The above feature improves probative value of verification information.

### Embodiment 3

The configuration of the operation management system according to the present Embodiment is the same as that of Embodiment 1 explained referring to Fig. 3.

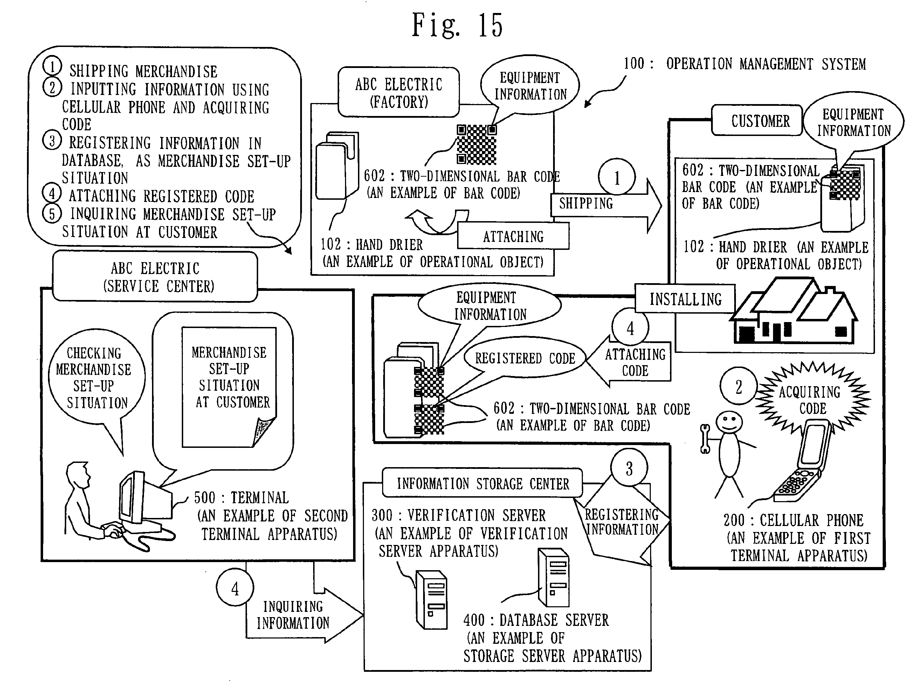

Fig. 15 illustrates a conceptual diagram showing an example of a configuration and use of the operation management system according to the present Embodiment.

(1) ABC Electric, being a manufacturer and also a service information provider, manufactures the hand drier 102 at its factory, attaches a two-dimensional bar code 602 (an example of a bar code) (for example, QR code (registered trademark)) by which equipment information relating to the hand drier 102 is encoded (for example, a label displaying the two-dimensional bar code 602 is attached), and ships the hand drier 102 as merchandise.
(2) An installation personnel installs the hand drier 102 inside the building of a customer who purchased it. Then, the installation personnel extracts equipment information by reading the two-dimensional bar code 602 attached to the hand drier 102, using a bar code reader included in the cellular phone 200, inputs operation information relating to the installation operation, customer information, etc. to the cellular phone 200, and acquires a verification code which verifies the installation time and position from the information storage center, using the cellular phone 200 (the verification server 300 installed in the information storage center generates this verification code).
(3) The installation personnel transmits the information extracted and input at (2) to the information storage center, as a set-up situation of the merchandise using the cellular phone 200, and registers it in the database 450 installed in the information storage center. The information registered is stored to be corresponding to the verification code acquired at (2) (the database server 400 installed in the information storage center acquires this verification code from the cellular phone 200 or the verification server 300 and stores it in the database 450).
(4) The installation personnel attaches the two-dimensional bar code 602 (registered code) by which the information registered at (3) is encoded, to the hand drier 102. By keeping the registered code attached, after installation of the hand drier 102, the operation personnel who performs an operation, such as repairing, can automatically read operation information relating to the installation operation performed in the past, customer information, etc. by using the bar code reader. Therefore, time and effort of inputting by hand can be saved.
(5) ABC Electric inquires of the database 450 installed in the information storage center for a merchandise set-up situation at the customer, by using the terminal 500 in the service center.

Operations of the operation management system according to the present Embodiment are the same as those of Embodiment 2 explained referring to Figs. 5, 11, 8 and 13. However, as described below, in the present Embodiment, there is a difference from Step S504 in Fig. 11 used for the explanation of Embodiment 2.

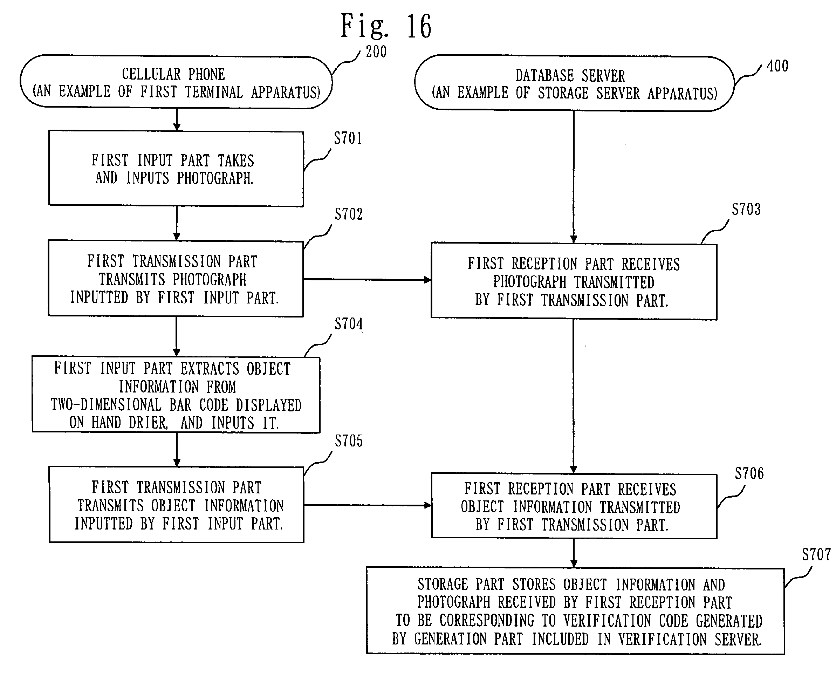

Fig. 16 is a flowchart showing operations of the operation management system (an example of the operation management method) according to the present Embodiment, which is corresponding to Fig. 11. Steps from S701 to S703 are corresponding to the steps from S501 to S503 in Fig. 11, and steps from S705 to S707 are corresponding to the steps from S505 to S507 in Fig. 11. However, in Step S704, the first input part 201 included in the cellular phone 200 extracts object information from the two-dimensional bar code 602 displayed on the hand drier 102, and inputs it.

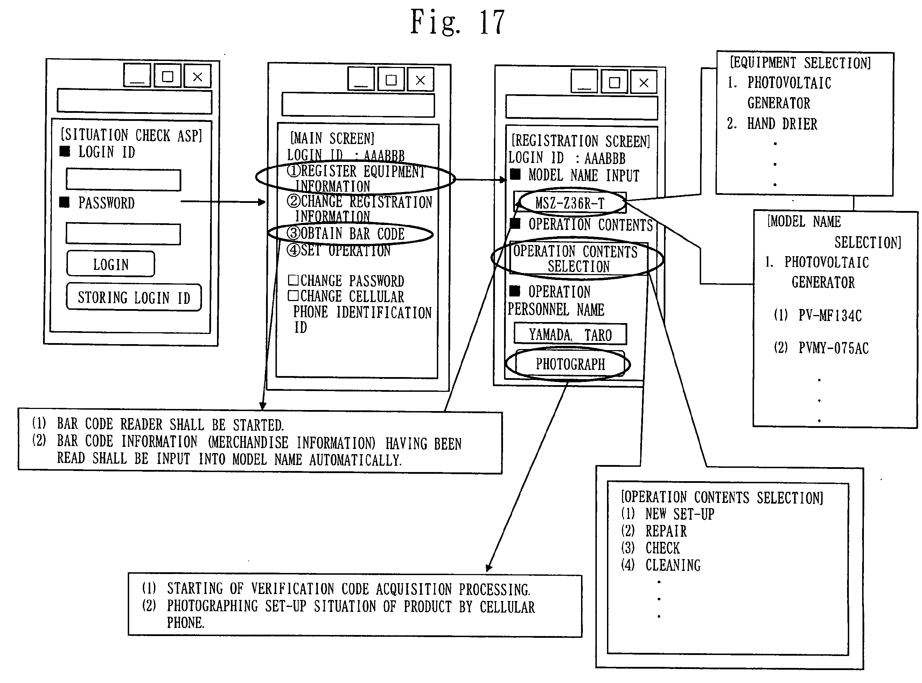

Fig. 17 shows an example of screen transition of the cellular phone 200.

With respect to the 'register equipment information', it is the same as that shown in Fig. 12 used for the explanation of Embodiment 2. In the example of Fig. 17, after logging in, the user selects 'obtain bar code' from the menu displayed on the main screen. When the user selects 'obtain bar code, ' the bar code reader of the cellular phone 200 starts, reads the two-dimensional bar code 602 attached on the product, and automatically inputs bar code information (equipment information 454 etc.) into a registration screen (screen on the right side of Fig. 17).

As stated above, the operation management system according to the present Embodiment includes the same features as the operation management system according to Embodiment 1, and
the operational object displays a bar code by which the object information is encoded, and
the first input part included in the first terminal apparatus extracts and inputs the object information from the bar code displayed on the operational object.
The above feature makes it possible to save time and effort of inputting by hand.

Moreover, the operation management method according to the present Embodiment includes the same features as the operation management method according to Embodiment 1, and
the operational object displays a bar code by which the object information is encoded, and
the operation management method includes
extracting and inputting the object information from the bar code displayed on the operational object, by the first input part included in the first terminal apparatus.
The above feature makes it possible to save time and effort of inputting by hand.

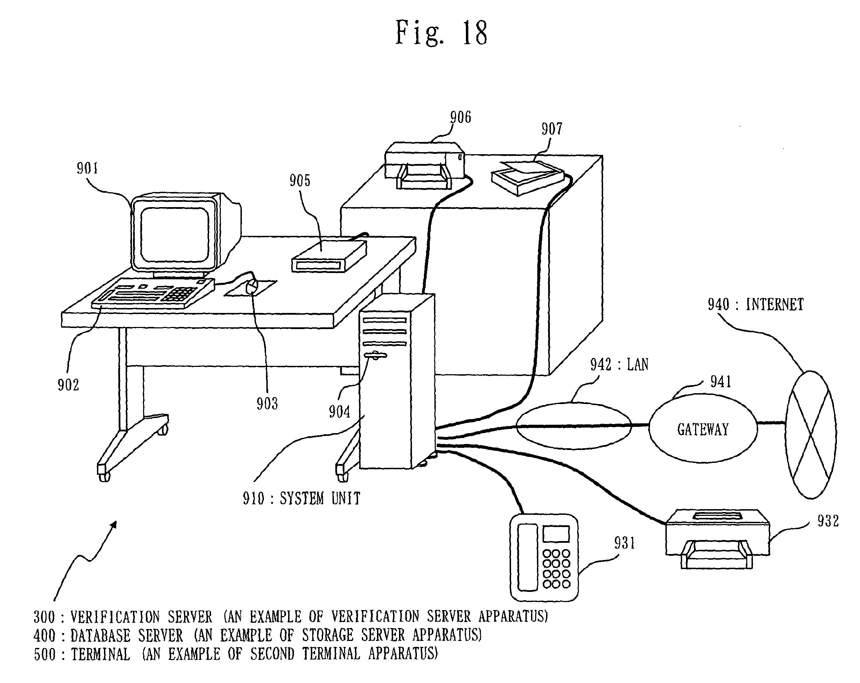

Fig. 18 shows an example of appearance of each apparatus configuring the operation management system according to the above-mentioned Embodiments.

In Fig. 18, the verification server 300, the database server 400, and the terminal 500 are provided with a system unit 910, a CRT (Cathode Ray Tube) display 901, a keyboard (K/B) 902, a mouse 903, a compact disk drive (CDD) 905, a printer 906, and a scanner 907, and these are connected by cable. Furthermore, the verification server 300, the database server 400, and the terminal 500 are connected to a facsimile machine 932 and a telephone 931 by cable, and connected to the Internet 940 through a LAN 942 and a gateway 941.

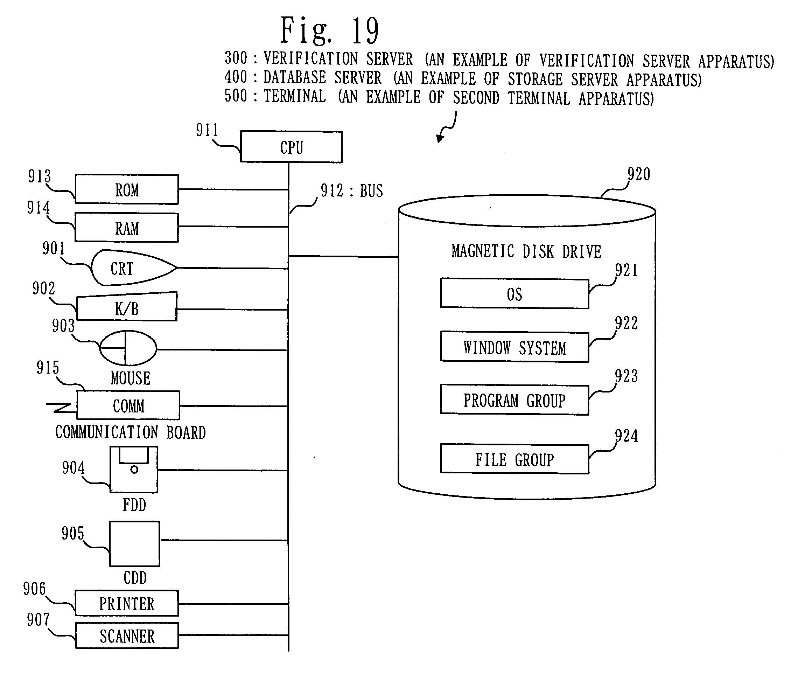

Fig. 19 shows an example of a hardware configuration of each apparatus configuring the operation management system according to the above-mentioned Embodiments.

In Fig. 19, the verification server 300, the database server 400, and the terminal 500 are provided with a CPU (Central Processing Unit) 911 which executes a program. The CPU 911 is connected to a ROM 913, a RAM 914, a communication board 915, the CRT display 901, the K/B 902, the mouse 903, a FDD (Flexible Disk Drive) 904, a magnetic disk drive 920, the CDD 905, the printer 906, and the scanner 907, through a bus 912.

The RAM 914 is an example of a volatile memory. The ROM 913, the FDD 904, the CDD 905, and the magnetic disk drive 920 are examples of nonvolatile memories. These are examples of the storage apparatuses or the storage parts.

The communication board 915 is connected to the facsimile machine 932, the telephone 931, the LAN 942, etc. The communication board 915 is an example of the transmission part, the reception part, the input apparatus, the input part, the output apparatus, or the output part.

For example, the K/B 902, the scanner 907, the FDD 904, etc. are examples of the input apparatuses or the input parts. Moreover, for example, the CRT display 901 etc. is an example of the output apparatus or the output part.

It is also acceptable for the communication board 915 to be directly connected to the Internet 940, or a WAN, such as ISDN (Integrated Services Digital Network) instead of the LAN 942. When directly connected to the Internet 940 or the WAN, such as ISDN, the verification server 300, the database server 400, and the terminal 500 are connected to the Internet 940 or the WAN, such as ISDN, and the gateway 941 becomes unnecessary.

An operating system (OS) 921, a window system 922, a program group 923, and a file group 924 are stored in the magnetic disk drive 920. The program group 923 is executed by the CPU 911, the OS 921, and the window system 922.

In the program group 923, a program which executes the function described as a 'so-and-so part' in the above-mentioned Embodiments is stored. The program is read and executed by the CPU 911.

For example, the CPU 911 etc. is an example of a processing apparatus or a processing part.

In the file group 924, what is described as 'so-and-so information', 'so-and-so result', and 'so-and-so data' in the above Embodiments is stored as a file or a part of it.

Moreover, the arrows in the flowcharts described in the above Embodiments mainly indicate inputting and outputting data. The data to be input and output is stored in other recording medium, such as the magnetic disk drive 920, a FD (Flexible Disk), an optical disk, a CD (compact disk), a MD (mini disk), and a DVD (Digital Versatile Disk), or transmitted by a signal line or other transmission media.

Moreover, what is described as a 'so-and-so part' in the above Embodiments may be realized by firmware stored in the ROM 913. Otherwise, it may be executed by software only, hardware only, a combination of software and hardware or a combination with firmware.

Moreover, the program which executes Embodiments mentioned above may be stored by using a recording apparatus of other recording medium, such as the magnetic disk drive 920, a FD, an optical disk, a CD, a MD, and a DVD.

### Brief Description of the Drawings

- Fig. 1: illustrates a conceptual diagram showing an example of use of an operation management system in each Embodiment;
- Fig. 2: illustrates a conceptual diagram showing an example of a configuration and use of an operation management system according to Embodiment 1;
- Fig. 3: illustrates a block diagram showing a configuration of the operation management system according to Embodiment 1;
- Fig. 4: illustrates an example of a configuration of a database according to Embodiment 1;
- Fig. 5: is a flowchart showing operations of the operation management system according to Embodiment 1;
- Fig. 6: is a flowchart showing operations of the operation management system according to Embodiment 1;
- Fig. 7: shows an example of screen transition of a cellular phone according to Embodiment 1;
- Fig. 8: is a flowchart showing operations of the operation management system according to Embodiment 1;
- Fig. 9: is a flowchart showing operations of the operation management system according to Embodiment 1;
- Fig. 10: shows an example of screen output of a terminal according to Embodiment 1;
- Fig. 11: is a flowchart showing operations of an operation management system according to Embodiment 2;
- Fig. 12: shows an example of screen transition of a cellular phone according to Embodiment 2;
- Fig. 13: is a flowchart showing operations of the operation management system according to Embodiment 2;
- Fig. 14: shows an example of screen output of a terminal according to Embodiment 2;
- Fig. 15: illustrates a conceptual diagram showing an example of a configuration and use of an operation management system according to Embodiment 3;
- Fig. 16: is a flowchart showing operations of the operation management system according to Embodiment 3;
- Fig. 17: shows an example of screen transition of a cellular phone according to Embodiment 3;
- Fig. 18: shows an example of appearance of each apparatus configuring the operation management system according to each Embodiment; and
- Fig. 19: shows an example of a hardware configuration of each apparatus configuring the operation management system according to each Embodiment.

### Description of the Reference Signs

- 100 =: operation management system
- 101 =: photovoltaic generator
- 102 =: hand drier
- 150 =: network
- 151 =: GPS satellite
- 152 =: weather satellite
- 200 =: cellular phone
- 201 =: first input part
- 202 =: first transmission part
- 203 =: third input part
- 204 =: third transmission part
- 300 =: verification server
- 301 =: generation part
- 302 =: third reception part
- 400 =: database server
- 401 =: first reception part
- 402 =: storage part
- 403 =: second reception part
- 404 =: read part
- 405 =: output part
- 450 =: database
- 451 =: map data
- 452 =: business information
- 453 =: customer information
- 454 =: equipment information
- 455 =: operation information
- 456 =: photograph
- 500 =: terminal
- 501 =: second input part
- 502 =: second transmission part
- 601 =: verification code
- 602 =: two-dimensional bar code
- 901 =: CRT display
- 902 =: K/B
- 903 =: mouse
- 904 =: FDD
- 905 =: CDD
- 906 =: printer
- 907 =: scanner
- 910 =: system unit
- 911: = CPU
- 912: = bus
- 913: = ROM
- 914 =: RAM
- 915 =: communication board
- 920 =: magnetic disk drive
- 921: = OS
- 922 =: window system
- 923 =: program group
- 924 =: file group
- 931 =: telephone
- 932 =: facsimile machine
- 940 =: Internet
- 941 =: gateway
- 942 =: LAN.

## Claims

1. An operation management system comprising:
- a verification server apparatus to generate verification information verifying a time and a position at which an operation was performed for an operational object being an object of an operation by an operation personnel; and
- a storage server apparatus to store object information relating to the operational object to be corresponding to the verification information generated by the verification server apparatus, in a storage part; when either one of the object information, at least a part of it, and the verification information is input, to read the object information and the verification information corresponding to input information, from the storage part; and to output the object information having been read and information indicating the time and the position verified by the verification information having been read.

2. An operation management system comprising:
- a first terminal apparatus including a first input part to input object information relating to an operational object being an object of an operation by an operation personnel, and a first transmission part to transmit the object information input by the first input part;
- a verification server apparatus including a generation part to generate verification information verifying a time and a position at which the operation was performed for the operational object;
- a storage server apparatus including a first reception part to receive the object information transmitted by the first transmission part included in the first terminal apparatus, and a storage part to store the object information received by the first reception part to be corresponding to the verification information generated by the generation part included in the verification server apparatus; and
- a second terminal apparatus including a second input part to input either one of the object information, at least a part of it, and the verification information, and a second transmission part to transmit information input by the second input part,
wherein the storage server apparatus further includes a second reception part to receive the information transmitted by the second transmission part included in the second terminal apparatus, a read part to read the object information and the verification information corresponding to the information received by the second reception part, from the storage part, and an output part to output the object information read by the read part and information indicating the time and the position verified by the verification information read by the read part.

3. The operation management system according to claim 2,
wherein the first terminal apparatus further includes a third input part to input information indicating a time and a position at which the operation was performed for the operational object, and a third transmission part to transmit the information input by the third input part,
the verification server apparatus further includes a third reception part to receive the information transmitted by the third transmission part included in the first terminal apparatus, and
the generation part included in the verification server apparatus generates the verification information by synthesizing the information received by the third reception part and unique data obtained only at either one of the time and the position at which the operation was performed for the operational object.

4. The operation management system according to claim 2,
wherein the verification information verifies a time and a position at which a photograph of the operational object was taken, as the time and the position at which the operation was performed for the operational object,
the first input part included in the first terminal apparatus takes and inputs the photograph,
the first transmission part included in the first terminal apparatus transmits the photograph input by the first input part,
the first reception part included in the storage server apparatus receives the photograph transmitted by the first transmission part included in the first terminal apparatus,
the storage part included in the storage server apparatus stores the object information and the photograph received by the first reception part to be corresponding to the verification information generated by the generation part included in the verification server apparatus,
the read part included in the storage server apparatus reads the object information, the photograph, and the verification information corresponding to the information received by the second reception part, from the storage part, and
the output part included in the storage server apparatus outputs the object information and the photograph read by the read part and the information indicating the time and the position verified by the verification information read by the read part.

5. The operation management system according to claim 4,
wherein the generation part included in the verification server apparatus generates the verification information by synthesizing information indicating the time and the position at which the operation was performed for the operational object, unique data obtained only at either one of the time and the position, and the photograph.

6. The operation management system according to claim 2,
wherein the operational object displays a bar code by which the object information is encoded, and
the first input part included in the first terminal apparatus extracts and inputs the object information from the bar code displayed on the operational object.

7. The operation management system according to claim 2,
wherein the second input part included in the second terminal apparatus inputs location information relating to the location at which the operation was performed,
the second transmission part included in the second terminal apparatus transmits the location information,
the second reception part included in the storage server apparatus receives the location information transmitted by the second transmission part included in the second terminal apparatus,
the storage part included in the storage server apparatus stores the location information received by the second reception part to be corresponding to the verification information generated by the generation part included in the verification server apparatus,
the read part included in the storage server apparatus reads the object information, the location information and the verification information corresponding to the information received by the second reception part, from the storage part, and
the output part included in the storage server apparatus outputs the object information and the location information read by the read part, and the information indicating the time and the position verified by the verification information read by the read part.

8. The operation management system according to claim 7,
wherein the storage part included in the storage server apparatus stores map data, and
the output part included in the storage server apparatus outputs either one of the location indicated by the location information read by the read part and a position verified by the verification information read by the read part, onto the map data stored in the storage part.

9. The operation management system according to claim 2,
wherein the read part of the storage server apparatus creates history information on the operation for the operational object, based on the object information and the verification information corresponding to the information received by the second reception part, and
the output part of the storage server apparatus outputs the history information created by the read part.

10. The operation management system according to claim 2,
wherein the operation includes at least one of installing, checking, repairing, and calling-back of the operational object.

11. The operation management system according to claim 2,
wherein the operational object includes at least one of air-conditioning equipment, a photovoltaic generator, an elevator, a water heater, a hand drier, FA (Factory Automation) equipment, and NC (Numerical Control) equipment.

12. An operation management method comprising:
- inputting object information relating to an operational object being an object of an operation by an operation personnel, by a first input part included in a first terminal apparatus;
- transmitting the object information input by the first input part, by a first transmission part included in the first terminal apparatus;
- generating verification information verifying a time and a position at which the operation was performed for the operational object, by a generation part included in a verification server apparatus;
- receiving the object information transmitted by the first transmission part included in the first terminal apparatus, by a first reception part included in a storage server apparatus;
- storing the object information received by the first reception part to be corresponding to the verification information generated by the generation part included in the verification server apparatus, by a storage part included in the storage server apparatus;
- inputting either one of the object information, at least a part of it, and the verification information, by a second input part included in a second terminal apparatus;
- transmitting information input by the second input part, by a second transmission part included in the second terminal apparatus;
- receiving the information transmitted by the second transmission part included in the second terminal apparatus, by a second reception part included in the storage server apparatus;
- reading the object information and the verification information corresponding to the information received by the second reception part, from the storage part, by a read part included in the storage server apparatus; and
- outputting the object information read by the read part and information indicating the time and the position verified by the verification information read by the read part, by an output part included in the storage server apparatus.

13. The operation management method according to claim 12,
wherein the operation management method includes
- inputting information indicating a time and a position at which the operation was performed for the operational object, by a third input part included in the first terminal apparatus,
- transmitting the information input by the third input part, by a third transmission part included in the first terminal apparatus,
- receiving the information transmitted by the third transmission part included in the first terminal apparatus, by a third reception part included in the verification server apparatus, and
- generating the verification information by synthesizing the information received by the third reception part and unique data obtained only at either one of the time and the position at which the operation was performed for the operational object, by the generation part included in the verification server apparatus.

14. The operation management method according to claim 12,
wherein the verification information verifies a time and a position at which a photograph of the operational object was taken, as the time and the position at which the operation was performed for the operational object, and
the operation management method includes
taking and inputting the photograph, by the first input part included in the first terminal apparatus,
transmitting the photograph input by the first input part, by the first transmission part included in the first terminal apparatus,
receiving the photograph transmitted by the first transmission part included in the first terminal apparatus, by the first reception part included in the storage server apparatus,
storing the object information and the photograph received by the first reception part to be corresponding to the verification information generated by the generation part included in the verification server apparatus, by the storage part included in the storage server apparatus,
reading the object information, the photograph, and the verification information corresponding to the information received by the second reception part, from the storage part, by the read part included in the storage server apparatus, and outputting the object information and the photograph read by the read part and the information indicating the time and the position verified by the verification information read by the read part, by the output part included in the storage server apparatus.

15. The operation management method according to claim 14,
wherein the operation management method includes
generating the verification information by synthesizing information indicating the time and the position at which the operation was performed for the operational object, unique data obtained only at either one of the time and the position, and the photograph, by the generation part included in the verification server apparatus.

16. The operation management method according to claim 12,
wherein the operational object displays a bar code by which the object information is encoded, and
the operation management method includes
extracting and inputting the object information from the bar code displayed on the operational object, by the first input part included in the first terminal apparatus.

17. The operation management method according to claim 12,
wherein the operation management method includes
- inputting location information relating to the location at which the operation was performed, by the second input part included in the second terminal apparatus,
- transmitting the location information, by the second transmission part included in the second terminal apparatus,
- receiving the location information transmitted by the second transmission part included in the second terminal apparatus, by the second reception part included in the storage server apparatus,
- storing the location information received by the second reception part to be corresponding to the verification information generated by the generation part included in the verification server apparatus, by the storage part included in the storage server apparatus,
- reading the object information, the location information and the verification information corresponding to the information received by the second reception part, from the storage part, by the read part included in the storage server apparatus, and
- outputting the object information and the location information read by the read part, and the information indicating the time and the position verified by the verification information read by the read part, by the output part included in the storage server apparatus.

18. The operation management method according to claim 17,
wherein the operation management method includes
- storing map data, by the storage part included in the storage server apparatus, and
- outputting either one of the location indicated by the location information read by the read part and a position verified by the verification information read by the read part, onto the map data stored in the storage part, by the output part included in the storage server apparatus.

19. The operation management method according to claim 12,
wherein the operation management method includes
- creating history information on the operation for the operational object, based on the object information and the verification information corresponding to the information received by the second reception part, by the read part of the storage server apparatus, and
- outputting the history information created by the read part, by the output part of the storage server apparatus.

20. A storage server apparatus comprising:
- a storage part to store object information relating to an operational object to be corresponding to verification information, which verifies a time and a position at which an operation was performed for the operational object, generated by a verification server apparatus which generates the verification information;
- a read part, when either one of the object information, at least a part of it, and the verification information is input, to read the object information and the verification information corresponding to input information, from the storage part; and
- an output part to output the object information read by the read part and information indicating the time and the position verified by the verification information read by the read part.

21. A terminal apparatus comprising:
- an input part to input object information relating to an operational object being an object of an operation by an operation personnel, and to input information indicating a time and a position at which the operation was performed for the operational object; and
- a transmission part to transmit the information indicating the time and the position input by the input part to a verification server apparatus which generates verification information verifying the time and the position at which the operation was performed for the operational object based on the information, and to transmit the object information input by the input part to a storage server apparatus which stores the object information to be corresponding to the verification information generated by the verification server apparatus.
